# EUROPÄISCHE PATENTSCHRIFT

(11) **EP 3 318 763 B1**
(45) Veröffentlichungstag und Bekanntmachung des Hinweises auf die Patenterteilung: **01.07.2020**
(21) Anmeldenummer: 17160715.3
(22) Anmeldetag: 14.03.2017
(51) Int. Cl.: F04D 19/04, F04D 29/02, F04D 29/08, F04D 29/60, F16J 15/12

(54) **VAKUUMDICHTUNG, DOPPELDICHTUNG, VAKUUMSYSTEM UND VAKUUMPUMPE**
VACUUM SEAL, DUAL SEAL, VACUUM SYSTEM AND VACUUM PUMP
ÉTANCHÉITÉ AU VIDE, ÉTANCHÉITÉ DOUBLE, SYSTÈME À VIDE ET POMPE À VIDE

(30) Priorität: 04.11.2016 EP 16197428
(43) Veröffentlichungstag der Anmeldung: 09.05.2018
(73) Patentinhaber: PFEIFFER VACUUM GMBH, 35614 Asslar (DE)
(72) Erfinder: Lohse, Martin, 35586 Wetzlar (DE); Stoll, Tobias, 35644 Hohenaar (DE); Schweighöfer, Michael, 35641 Schöffengrund (DE); Hofmann, Jan, 35305 Grünberg (DE)
(74) Vertreter: Manitz Finsterwald Patent- und Rechtsanwaltspartnerschaft mbB

(56) Entgegenhaltungen:
- EP-A1- 1 987 273
- EP-A1- 2 410 184
- EP-A1- 2 896 649
- DE-A1-102007 061 188
- US-A1- 2005 248 072

## Beschreibung

Die vorliegende Erfindung betrifft eine Vakuumdichtung zum Abdichten einer Verbindung zwischen zwei Dichtflächen, insbesondere Flanschen, insbesondere einen Auslassflansch eines Rezipienten und einen Einlassflansch einer Vakuumpumpe, insbesondere Turbomolekularpumpe, wobei die Dichtung einen ringartig geschlossenen Metallkörper aufweist.

Bei Vakuumanwendungen, in denen sehr niedrige Vakuumdrücke benötigt werden, kann das Problem auftreten, dass im Bereich zwischen zwei Flanschen, welcher typischerweise durch eine zwischen den Flanschen angeordnete Dichtung abgedichtet wird, ein wenn auch geringfügiges Vakuumleck auftritt, durch das die erreichbaren Enddrücke begrenzt werden können. Eine Limitierung der erreichbaren Enddrücke tritt außerdem auf, wenn Dichtungen aus einem Elastomer, wie etwa PTFE, FKM oder Viton, verwendet werden, da es bei diesen Materialien zu Effekten wie Diffusion und Ausgasen kommen kann.

Alternativ kommen nach dem Stand der Technik metallische Dichtungen zum Einsatz, mit denen sich ähnlich tiefe Drücke zuverlässig erreichen lassen. Eine derartige metallische Dichtung besteht dabei aus einem ringartig geschlossenen, in der Regel flachen Metallkörper, z.B. aus Kupfer. Eine derartige metallische Dichtung wird normalerweise in Kombination mit zwei CF-Flanschen verwendet. Die CF-Flansche mit der dazwischen gelegten Dichtung werden in bekannter Weise durch Schrauben-Muttern-Verbindungen aneinander befestigt. Für eine hohe Dichtigkeit müssen die Schrauben fest angezogen werden, um einen ausreichend hohen Anpressdruck zwischen der Dichtung und den der Dichtung zugewandten Flanschoberflächen sicherzustellen.

Als Alternative zu diesen CF-Flanschen sind sogenannte Mehrfach- oder Doppeldichtungen bekannt, bei denen jeweils eine äußere Dichtung eine innere Dichtung in einem Abstand zur inneren Dichtung umschließt und deren Vorteile grundsätzlich bekannt sind. Als innere Dichtungen können nach dem der Anmelderin intern bekannten Stand der Technik Flachdichtungen aus PTFE zum Einsatz kommen, die bis zu Drücken von 10⁻¹⁰ mbar gute Ergebnisse liefern, sowie Spaltdichtungen oder sogenannte Thermo-Spaltdichtungen verwendet werden.

Auch die mit diesen Doppeldichtungen erreichbaren Enddrücke sind allerdings begrenzt. Die Grenzen der PTFE-Dichtungen beispielsweise sind durch die diffusionsoffene Strutur des PTFE-Materials und die Grenzen von Spaltdichtungen durch die erreichbare Oberflächenrauigkeit und Ebenheit des verwendeten Materials begründet.

Weiter kommen nach dem Stand der Technik Metall-Elastomer-Vakuumdichtungen vor (EP 2 896 649 A1).

Der vorliegenden Erfindung liegt die Aufgabe zugrunde, eine verbesserte Vakuumdichtung bereitzustellen, die auch noch bei sehr niedrigen Vakuumdrücken, insbesondere bei Drücken unter 10⁻¹⁰ mbar, eine zuverlässige Abdichtung ermöglicht.

Die Aufgabe wird durch eine Vakuumdichtung mit den Merkmalen des Anspruchs 1 gelöst und insbesondere dadurch, dass am Metallkörper ein Mantel aus einem nicht-metallischen Material angeordnet ist, dass eine Oberflächenseite des Metallkörpers eine in Umfangsrichtung umlaufende und aus der Oberflächenseite hervorstehende Erhebung aufweist und dass der Mantel die Erhebung überdeckt.

Der Erfindung liegt der Gedanke zugrunde, dass die Dichtungswirkung einer Dichtung aus einem Metallkörper, deren Oberflächenrauigkeit zu Leckagen führt, dadurch verbessert wird, dass der Metallkörper mit einem Mantel aus einem nicht-metallischen Material versehen wird. Das nicht-metallische Material kann dabei insbesondere derart ausgestaltet sein, dass es die Oberflächenrauigkeit des Metallkörpers ausgleicht bzw. zumindest zu einem gewissen Grad kompensiert, um eine verbesserte Abdichtung zu bewirken.

Die erfindungsgemäße Vakuumdichtung lässt sich insbesondere in Zusammenhang mit Vakuumanwendungen einsetzen, bei denen besonders niedrige Enddrücke, insbesondere unter 10⁻¹⁰ mbar, benötigt werden.

Schneidkanten an den Dichtflächen bzw. Flanschen werden nicht benötigt, können jedoch optional vorgesehen sein. Die Herstellung der Dichtflächen bzw. Flansche lässt sich dadurch vereinfachen und auch verbilligen.

Vorteilhaft an der erfindungsgemäßen Vakuumdichtung im Vergleich zu einer bloßen metallischen Dichtung ist insbesondere, dass bei Verwendung von CF-Flanschen das erforderliche Anzugmoment der Schraubverbindungen zur Erreichung einer sicheren Abdichtung weniger kritisch ist.

Aus dem Stand der Technik bekannte CF-Flansche bestehen normalerweise aus Edelstahl und die metallenen Dichtungen bestehen in der Regel aus Kupfer. Daher sind derartige Flansch-Dichtungs-Kombinationen verhältnismäßig teuer. Ein weiterer Vorteil der erfindungsgemäßen Vakuumdichtung liegt nun darin, dass deren Metallkörper aus einem günstigeren Material, wie bspw. Aluminium, ausgestaltet sein kann, und dass die erfindungsgemäße Vakuumdichtung auch in Kombination mit Flanschen aus z.B. Aluminium oder einer Aluminiumlegierung einsetzbar ist. Es ist auch denkbar, dass nicht nur der Flansch, sondern dass auch das Gehäuse der den Flansch aufweisenden Vakuumeinrichtung aus Aluminium oder einer Aluminiumlegierung ausgebildet ist. Dadurch können gegenüber einer Ausbildung aus Edelstahl Kosten eingespart werden. Aufgrund des geringen Gewichts von Aluminium kann zudem eine Gewichtsreduktion erreicht werden.

Für den Begriff "Vakuumdichtung" wird hierin auch nur die Kurzform "Dichtung" verwendet.

Der Begriff "Mantel" ist breit zu verstehen. Unter Mantel soll insbesondere auch eine Lage, Schicht oder dergleichen des nicht-metallischen Materials verstanden werden, welche mindestens auf einem Teil der Oberfläche des Metallkörpers angeordnet ist.

Wenn nachfolgend von einem Flansch die Rede ist, kann darunter auch allgemein eine grundsätzlich beliebige Dichtfläche zu verstehen sein, die nicht von oder an einem Flansch gebildet sein muss.

Vorzugsweise ist der Metallkörper in Art eines federelastischen Dichtungselements, zum Beispiel in C-Form oder V-Form, oder in Art einer Flachdichtung ausgebildet. Der Metallkörper kann von seiner Form her insbesondere wie aus dem Stand der Technik bekannte metallische Dichtungen ausgestaltet sein. Der Metallkörper lässt sich somit nach bekannten Herstellungsverfahren anfertigen. Federelastische Dichtungselemente haben den Vorteil, dass Maß- und Formtoleranzen der Dichtungspartner besser ausgeglichen werden können.

Der Metallkörper kann Aluminium oder, insbesondere weichgeglühtes, Kupfer aufweisen oder daraus bestehen. Durch die Verwendung von Aluminium, einer Aluminiumlegierung, wie etwa EN AW 1050a H111 oder EN AW 6082, oder Kupfer kann sichergestellt werden, dass der Metallkörper der erfindungsgemäßen Vakuumdichtung ein dichtes Gefüge und somit eine hohe Gasdichtheit aufweist. Eine Gasdiffusion durch den Metallkörper hindurch kann somit ausgeschlossen werden. Weichgeglühtes Kupfer weist eine geringere Härte als Edelstahl oder Aluminium auf, so dass eine erfindungsgemäße Dichtung mit einem Kern aus weichgeglühtem Kupfer z.B. auch in Kombination mit, insbesondere eine Schneidkante aufweisenden, Flanschen aus Edelstahl, Aluminium oder einer Aluminiumlegierung einsetzbar ist.

Vorzugsweise umfasst der Mantel ein Elastomer oder einen anderen zumindest im Wesentlichen nicht ausgasenden Kunststoff, oder der Mantel besteht aus dem Elastomer oder dem nicht ausgasenden Kunststoff.

Bei dem Elastomer handelt es sich vorzugsweise um PTFE oder um einen auf PTFE basierenden Werkstoff, zum Beispiel PFA, TFM oder FEP.

Das Elastomer kann auch wenigstens einen Füllstoff aufweisen. Dadurch können je nach Füllstoff zum Beispiel die Diffusionseigenschaften und/oder die elektrischen Eigenschaften der Dichtung verbessert oder verändert werden.

PTFE steht für Polytetrafluorethylen. PTFE eignet sich besonders gut zur Verwendung als Mantelmaterial, da es allenfalls nur geringfügig ausgast und somit für sich genommen schon für Anwendungen im UHV-Bereich geeignet ist. Wenn die Dicke des Mantels ausreichend gering gewählt ist, fällt auch eine Permeation von Gas durch den PTFE-Mantel nicht mehr ins Gewicht. PTFE ist außerdem ein vergleichsweise weiches Material, so dass es die Rauigkeit der Oberflächenstruktur des Metallkörpers ausgleichen kann.

Der Mantel kann in Art einer Beschichtung auf dem Metallkörper aufgebracht sein. Der Mantel kann somit herstellungstechnisch einfach auf der Oberfläche des Metallkörpers angebracht werden.

Der Mantel kann mittels eines, insbesondere stoffschlüssigen, Fügeverfahrens, wie etwa Lamination, an bzw. auf dem Metallkörper angebracht sein. Eine herstellungstechnisch einfache Anbringung des Mantels am Metallkörper kann dadurch bewerkstelligt werden.

Der Mantel kann auch nicht fest mit dem Metallkörper verbunden sein. Bei dem Mantel kann es sich beispielweise um ein Formelement handeln, das über den Metallkörper gestülpt ist.

Der Mantel kann die Oberfläche des Metallkörpers vollständig oder nur teilweise umgeben. Eine vollständige Überdeckung des Metallkörpers lässt sich herstellungstechnisch einfach erreichen. Bei einer nur teilweisen Überdeckung erstreckt sich der Mantel vorzugsweise zumindest über die Oberflächenbereiche des Metallkörpers, welche den Flanschen gegenüberstehen. Die Flansche können daher in Anlage mit dem Mantel und nicht direkt mit dem Metallkörper kommen, so dass durch den Mantel eine bessere Abdichtung bewirkt werden kann.

Der Mantel erstreckt sich vorzugsweise vollumfänglich längs der Umfangsrichtung des Metallkörpers. Der Mantel kann somit ebenfalls wenigstens einen ringartig geschlossenen Körper auf dem Metallkörper bilden.

Die Dicke des Mantels entspricht vorzugsweise mindestens der Oberflächenrauigkeit des Metallkörpers. Als beispielhafter Wert seien hier 4 µm als Maß für die Oberflächenrauigkeit genannt.

Die Dicke eines mittels einer Beschichtung erzeugten Mantels kann zum Beispiel im Bereich zwischen 5 µm und 100 µm, bevorzugt 20 µm und 50 µm, vorzugsweise 25 µm und 40 µm, liegen. Die Dicke eines mittels Laminieren aufgebrachten Mantels kann zum Beispiel im Bereich zwischen 0,1 mm und 0,2 mm liegen. Vorzugsweise ist die Dicke des Mantels kleiner als 0,2 mm, bevorzugt kleiner als 0,15 mm und weiter bevorzugt kleiner als 0,1 mm. Bei den angegebenen Bereichsangaben gehört die jeweilige obere bzw. untere Grenze zum Bereich.

Erfindungsgemäß umfasst der Metallkörper zwei Oberflächenseiten, wobei eine der Oberflächenseiten der einen Dichtfläche, insbesondere dem einen Flansch, insbesondere Auslassflansch des Rezipienten, und die andere der Oberflächenseiten der anderen Dichtfläche, insbesondere dem anderen Flansch, insbesondere Einlassflansch der Vakuumpumpe, zugewandt ist, wenn die Dichtung bestimmungsgemäß zwischen den beiden Dichtflächen bzw. Flanschen angeordnet bzw. eingelegt ist, wobei wenigstens eine der beiden Oberflächenseiten der Dichtung wenigstens eine, in Umfangsrichtung der Dichtung umlaufende und aus der Oberflächenseite hervorstehende, Erhebung, insbesondere mit einer Höhe von 0,05 mm bis 0,2 mm oder 0,05 mm bis 0,5 mm, aufweist. Die Dichtung selbst kann somit eine Art Schneidkante in Form der Erhebung aufweisen. An der Erhebung ist eine höhere Flächenpressung möglich, wodurch die Abdichtwirkung weiter verbessert werden kann.

Dabei überdeckt der Mantel die Erhebung. Dadurch kann die Dichtwirkung weiter verbessert werden. Insbesondere können die Oberflächenrauigkeit und eventuell auch andere Unregelmäßigkeiten auf der Oberfläche der Erhebung zumindest zu einem gewissen Grad durch den Mantel ausgeglichen werden.

Die Erfindung betrifft außerdem eine Mehrfach- oder Doppeldichtung zum Abdichten einer Verbindung zwischen zwei Dichtflächen, insbesondere Flanschen, insbesondere zwischen einem Auslassflansch eines Rezipienten und einem Einlassflansch einer Vakuumpumpe, insbesondere Turbomolekularpumpe, wobei die Mehrfach- oder Doppeldichtung wenigstens eine erste Dichtung und eine zweite Dichtung aufweist, die zwischen den Dichtflächen, insbesondere Flanschen, derart angeordnet werden können, dass die zweite Dichtung die erste Dichtung in einem Abstand zur ersten Dichtung umschließt, wobei wenigstens eine der beiden Dichtungen und bevorzugt die erste, innere Dichtung eine erfindungsgemäße Dichtung ist.

Die Dichtungen müssen nicht in einer Ebene liegen, sondern sie können auch bspw. axial zueinander versetzt sein.

Vorzugsweise umfassen die erste Dichtung und die zweite Dichtung jeweils einen jeweiligen ringartig geschlossenen Metallkörper, wobei, ferner bevorzugt, die Metallkörper der beiden Dichtungen einstückig miteinander ausgebildet sind. Zwischen den einstückig ausgebildeten Metallkörpern kann wenigstens eine Trennstelle vorhanden sein, so dass die Dichtungen zwar als eine Einheit z.B. transportiert werden können, jedoch vor dem Einlegen zwischen zwei Dichtflächen bzw. Flansche voneinander getrennt werden können.

Die Erfindung betrifft außerdem ein Vakuumsystem mit wenigstens einer ersten Vakuumeinrichtung, insbesondere Vakuumpumpe, vorzugsweise Turbomolekularpumpe, und wenigstens einer zweiten Vakuumeinrichtung, insbesondere Rezipient, wobei ein Auslass, insbesondere Auslassflansch, der zweiten Vakuumeinrichtung mit einem Einlass, insbesondere Einlassflansch, der ersten Vakuumeinrichtung lösbar verbunden oder verbindbar ist, wobei zwischen dem Auslass und dem Einlass eine erfindungsgemäße Dichtung oder eine erfindungsgemäße Doppeldichtung angeordnet ist.

Vorzugsweise ist am Auslassflansch und/oder am Einlassflansch wenigstens eine, vorzugsweise in Umlaufrichtung des Flanschs umlaufende, Schneidkante zum Zusammenwirken mit der Dichtung ausgebildet, wobei die Schneidkante eine Höhe zwischen 0,05 mm und 0,2 mm oder zwischen 0,05 mm und 0,5 mm aufweist. Da bei einer erfindungsgemäßen Dichtung der Mantel vorgesehen ist, kann die Höhe der Schneidkante kleiner ausfallen als bei herkömmlichen Flanschen, wie etwa bei CF-Flanschen für Kupferdichtungen.

Grundsätzlich denkbar ist außerdem eine Vakuumpumpe, insbesondere Turbomolekularpumpe, mit einem Einlassflansch zum Anschließen eines Auslassflansches eines Rezipienten, wobei am Einlassflansch wenigstens eine, vorzugsweise in Umlaufrichtung des Flansches umlaufende, Schneidkante zum Zusammenwirken mit einer Dichtung ausgebildet ist, wobei die Schneidkante eine Höhe zwischen 0,05 mm und 0,2 mm oder zwischen 0,05 mm und 0,5 mm aufweist.

Die Erfindung betrifft ferner ein Vakuumsystem mit wenigstens einer ersten Vakuumeinrichtung, insbesondere Vakuumpumpe, und wenigstens einer zweiten Vakuumeinrichtung, insbesondere Rezipient, wobei ein Auslass, insbesondere Auslassflansch, der zweiten Vakuumeinrichtung mit einem Einlass, insbesondere Einlassflansch, der ersten Vakuumeinrichtung lösbar verbunden oder verbindbar ist, wobei auf der dem Einlass zugewandten Oberfläche des Auslasses und/oder auf der dem Auslass zugewandten Oberfläche des Einlasses ein in Umfangsrichtung, insbesondere Flanschumfangsrichtung, umlaufender Mantel aus einem nicht-metallischen Material angeordnet ist. Dabei weist wenigstens eine der beiden Oberflächen eine in die Umfangsrichtung umlaufende und aus der Oberfläche hervorstehende Erhebung auf, wobei der Mantel die Erhebung überdeckt. Eine separate Dichtung zwischen den beiden Dichtflächen bzw. Flanschen kann eingespart werden, da durch den Mantel bereits eine ausreichend hohe Dichtwirkung erreicht werden kann. Es muss somit nur noch ein "Spalt" zwischen den beiden Flanschen gedichtet werden im Gegensatz zu zwei Spalte, die zwischen einer Dichtung und jeweils einem der Flansche abgedichtet werden müssen.

Die Erfindung betrifft außerdem eine Vakuumpumpe, insbesondere Turbomolekularpumpe, mit einem Einlassflansch zum Anschließen eines Auslassflanschs eines Rezipienten, wobei an der Oberfläche des Einlassflanschs, welche bei angeschlossenem Rezipienten dem Auslassflansch zugewandt ist, ein in Flanschumfangsrichtung umlaufender Mantel aus einem nicht-metallischen Material angeordnet ist, wobei die Oberfläche eine in die Umfangsrichtung umlaufende und aus der Oberfläche hervorstehende Erhebung aufweist, wobei der Mantel die Erhebung überdeckt.

Grundsätzlich denkbar ist außerdem eine Dichtung mit einem Elastomer, insbesondere PTFE, welches wenigstens einen Füllstoff aufweist. Zum Beispiel kann das Elastomer mit dem Füllstoff versetzt sein. Je nach Füllstoff können zum Beispiel die Diffusionseigenschaften und/oder die elektrischen Eigenschaften der Dichtung verbessert oder verändert werden.

Die hierin genannten Merkmale in Zusammenhang mit dem "Mantel" gelten auch für die vorstehend genannten Varianten eines Vakuumsystems bzw. einer Vakuumpumpe.

Grundsätzlich denkbar ist außerdem ein Vakuumsystem umfassend eine Vakuumpumpe, die wenigstens eine Anschlussfläche mit zumindest einem ersten Einlass aufweist, einen Rezipient, der wenigstens einen Auslass aufweist, den eine, insbesondere röhrenförmige, Wandung umgibt, deren vom Auslass entfernt liegende Frontseite in Anlage mit der Anschlussfläche der Vakuumpumpe gebracht werden kann, und einen, insbesondere zylinderartigen, Adapter zur, insbesondere vakuumdichten, Verbindung der Vakuumpumpe mit dem Rezipient, wobei der Adapter innerhalb der Wandung des Rezipients aufgenommen ist bzw. aufgenommen werden kann, wenn der Adapter bestimmungsgemäß zwischen der Vakuumpumpe und dem Rezipient angeordnet ist, wobei der Adapter in axialer Richtung gesehen eine Länge aufweist, die zumindest im Wesentlichen der axialen Länge der, insbesondere gegenüber dem Auslass hervorragenden, Wandung des Rezipients entspricht, so dass eine Unterseite des Adapters an der Anschlussfläche der Vakuumpumpe und eine Oberseite des Adapters an der den Auslass umgebenden Anschlussfläche des Rezipients anliegt, wobei in dem Adapter ein erster Kanal zwischen der Unterseite und der Oberseite verläuft, welcher den ersten Einlass der Vakuumpumpe mit dem Auslass des Rezipients verbindet, wenn der Adapter bestimmungsgemäß zwischen der Vakuumpumpe und dem Rezipient angeordnet ist, und wobei zwischen der Oberseite des Adapters und der Anschlussfläche des Rezipients eine innere, erste Dichtung, insbesondere eine erfindungsgemäße Dichtung, und/oder zwischen der Frontseite der Wandung des Rezipients und der Anschlussfläche der Vakuumpumpe eine äußere, zweite Dichtung, insbesondere eine erfindungsgemäße Dichtung, angeordnet ist.

Bei dem Vakuumsystem dient der Adapter zum vakuumdichten Verbinden der Vakuumpumpe mit dem Rezipient, bei welchem der Auslass gegenüber der Frontseite der Wandung zurückversetzt ist. Der Rezipient kann somit eine innere Kammergeometrie aufweisen. Durch den Adapter kann die Vakuumpumpe in einfacher und kompakter Weise an den Rezipient mit der inneren Kammergeometrie angeschlossen werden. Dabei kann der erwähnte Auslass in eine Kammer des Rezipients münden. Der Rezipient kann dabei nur die eine Kammer oder mehrere Kammern mit einer entsprechenden Anzahl an Auslässen aufweisen.

Durch Verwendung der ersten Dichtung und/oder der zweiten Dichtung kann eine gewünschte Dichtwirkung erreicht werden. Die erste Dichtung und/oder die zweite Dichtung kann eine erfindungsgemäße Dichtung sein, also insbesondere eine Dichtung mit einem Metallkörper und einem Mantel aus einem nicht-metallischen Material.

Es kann sich bei der ersten Dichtung und/oder der zweiten Dichtung auch um eine herkömmliche Dichtung, wie etwa eine O-Ring-Dichtung, z.B. aus PTFE, handeln.

Bei der Vakuumpumpe handelt es sich insbesondere um eine Turbomolekularpumpe. Dadurch kann am ersten Einlass der Vakuumpumpe bzw. in der zu evakuierenden Kammer des Rezipients ein Hochvakuum oder sogar ein Ultrahochvakuum erzeugt werden.

Die Anschlussfläche der Vakuumpumpe kann zumindest einen weiteren, zweiten Einlass, insbesondere einen Nebeneinlass, aufweisen, und in dem Adapter kann wenigstens ein zweiter Kanal verlaufen, welcher an der Unterseite des Adapters in den zweiten Einlass der Vakuumpumpe mündet, wenn der Adapter bestimmungsgemäß zwischen der Vakuumpumpe und dem Rezipient angeordnet ist, wobei der zweite Kanal wenigstens eine Auslassöffnung an der sich zwischen der Oberseite und der Unterseite erstreckenden, radialen Außenseite des Adapters aufweist.

Der zweite Kanal verläuft somit zwischen der Unterseite und seiner zumindest einen Auslassöffnung an der Außenseite durch den Adapter. Über den zweiten Kanal kann Volumen, in welches die Auslassöffnung mündet, evakuiert werden. Dieses Volumen kann ein Ringvolumen sein, welches sich zwischen der Außenseite des Adapters und der Innenseite der Wandung des Rezipients erstreckt. Der zweite Kanal des Adapters und der damit verbundene zweite Einlass der Vakuumpumpe können somit als Zwischenabsaugung fungieren, um ein Gas, wie zum Beispiel Luft, das von außen in das Ringvolumen eindringt, abzusaugen. Das Vakuum im ersten Kanal bzw. im Auslass des Rezipients kann dadurch verbessert werden. Insbesondere können durch die Zwischenabsaugung im ersten Kanal bzw. in dem Auslass des Rezipients niedrigere Enddrücke erreicht werden.
In das erwähnte Volumen kann auch eine weitere, zweite Kammer des Rezipients münden, welche über den zweiten Kanal und den zweiten Einlass evakuiert werden kann.

Die erste Dichtung kann eine Trennung zwischen dem Auslass und der wenigstens einen Austrittöffnung des zweiten Kanals bewirken. Der erste Kanal, der mit dem Auslass des Rezipients in Verbindung steht, ist somit vom zweiten Kanal durch die erste Dichtung getrennt.

In der Anschlussfläche der Vakuumpumpe kann noch ein weiterer, dritter Einlass, insbesondere ein weiterer Nebeneinlass, vorgesehen sein, und in dem Adapter kann ein weiterer, dritter Kanal verlaufen, der an der Unterseite des Adapters in den dritten Einlass der Vakuumpumpe mündet und der wenigstens eine Auslassöffnung an der Außenseite des Adapters aufweist.

Der dritte Kanal kann - wie der zweite Kanal - wenigstens eine Auslassöffnung an der Außenseite des Adapters aufweisen. Die Auslassöffnung kann in ein Volumen münden, das über den dritten Kanal und den dritten Einlass der Vakuumpumpe evakuiert werden kann. Bei dem Volumen kann es sich ebenfalls um ein Ringvolumen handeln, das um die Außenseite des Adapters verläuft und von der Innenseite der Wandung des Rezipients umschlossen ist.

Der dritte Kanal des Adapters und der dritte Einlass der Vakuumpumpe können als weitere Zwischenabsaugung dienen, um Gas, das in das Ringvolumen eingedrungen ist, abzusaugen. Das Vakuum im Auslass des Rezipients kann dadurch verbessert bzw. der erreichbare Enddruck kann weiter reduziert werden.

In das Volumen kann auch eine weitere, dritte Kammer des Rezipients münden. Die dritte Kammer kann über den dritten Kanal und den dritten Einlass evakuiert werden.

Die wenigstens eine Auslassöffnung des dritten Kanals kann in axialer Richtung gesehen versetzt zu der wenigstens einen Auslassöffnung des zweiten Kanals an der Außenseite des Adapters ausgebildet sein.

Besonders vorteilhaft ist es, wenn eine weitere, dritte Dichtung die Auslassöffnung des zweiten Kanals und die Auslassöffnung des dritten Kanals voneinander trennt. Dadurch kann beispielsweise eine zweistufige Zwischenabsaugung realisiert werden.

Vorteilhafterweise ist die dritte Dichtung zwischen der Außenseite des Adapters und der Innenseite der Wandung angeordnet. Die dritte Dichtung trennt somit insbesondere das Volumen bzw. den Ringraum, in welchen der zweite Kanal mündet, von dem Volumen bzw. Ringraum, in welchen der dritte Kanal mündet.

Die dritte Dichtung ist vorzugsweise umlaufend an der Außenseite des Adapters angeordnet. Dabei kann an der Außenseite des Adapters eine umlaufende Anlagefläche für die dritte Dichtung vorgesehen sein, auf der die dritte Dichtung aufliegen kann. An der Innenseite der Wandung kann eine Gegenfläche ausgebildet sein, so dass die Dichtung zwischen der Anlagefläche des Adapters und der Gegenfläche an der Innenseite der Wandung eingepresst sein kann, wenn der Rezipient an der Vakuumpumpe angeschlossen ist und der Adapter bestimmungsgemäß zwischen der Vakuumpumpe und dem Rezipient angeordnet ist.

Die dritte Dichtung kann eine erfindungsgemäße Dichtung oder eine herkömmliche Dichtung, wie etwa ein O-Ring aus zum Beispiel PTFE.

Die Auslassöffnungen des zweiten und dritten Kanals können in Umfangsrichtung der Außenseite gesehen einen Versatz aufweisen. Dadurch kann die Anordnung bzw. der Verlauf der Kanäle durch den Adapter vereinfacht werden.

Zwischen der Unterseite des Adapters und der Anschlussfläche der Vakuumpumpe kann eine weitere, vierte Dichtung angeordnet sein, welche um wenigstens einen der an der Unterseite des Adapters liegenden Auslassöffnungen der Kanäle verläuft. Bei der vierten Dichtung kann es sich um ein Formteil, z.B. aus PTFE, handeln, welches jede Auslassöffnung umgibt bzw. Durchbrechungen aufweist, die mit den Auslassöffnungen ausgerichtet sind, wenn das Formteil bestimmungsgemäß zwischen der Anschlussfläche der Vakuumpumpe und der Unterseite des Adapters eingelegt ist.

Grundsätzlich denkbar ist außerdem ein Adapter, insbesondere für ein erfindungsgemäßes Vakuumsystem, zum vakuumdichten Verbinden einer Vakuumpumpe, die wenigstens eine Anschlussfläche mit zumindest einem ersten Einlass aufweist, mit einem Rezipient, der wenigstens einen Auslass aufweist, den eine, insbesondere röhrenförmige, Wandung umgibt, deren vom Auslass entfernt liegende Frontseite in Anlage mit der Anschlussfläche der Vakuumpumpe gebracht werden kann, wobei der, insbesondere zylinderartige, Adapter derart ausgestaltet ist, dass er innerhalb der Wandung des Rezipients aufgenommen werden kann, wenn der Adapter bestimmungsgemäß zwischen der Vakuumpumpe und dem Rezipient angeordnet ist, wobei der Adapter in axialer Richtung gesehen eine Länge aufweist, die zumindest im Wesentlichen der axialen Länge der Wandung des Rezipients entspricht, so dass eine Unterseite des Adapters an der Anschlussfläche der Vakuumpumpe und eine Oberseite des Adapters an der den Auslass umgebenden Anschlussfläche des Rezipients anliegt, wenn der Adapter bestimmungsgemäß zwischen der Vakuumpumpe um dem Rezipient angeordnet ist, wobei in dem Adapter ein erster Kanal zwischen der Unterseite und der Oberseite verläuft, welcher den ersten Einlass der Vakuumpumpe mit dem Auslass des Rezipients verbindet, wenn der Adapter bestimmungsgemäß zwischen der Vakuumpumpe und dem Rezipient angeordnet ist.

An der Oberseite des Adapters kann eine Anlagefläche, insbesondere in Form einer umlaufenden Nut, ausgebildet sein, an welche eine innere, erste Dichtung anlegbar ist, die zwischen der Oberseite des Adapters und der Anschlussfläche des Rezipients angeordnet, insbesondere eingepresst, ist, wenn der Rezipient an die Vakuumpumpe mit dem Adapter als dazwischenliegendes Verbindungsstück angeschlossen ist.

Ferner kann, wenn der Rezipient an die Vakuumpumpe angeschlossen ist, zwischen der Frontseite der Wandung des Rezipients und der Anschlussfläche der Vakuumpumpe eine äußere, zweite Dichtung eingepresst sein.

An der Unterseite des Adapters kann eine, insbesondere in radialer Richtung verlaufende Nut oder Einsenkung, vorgesehen sein, die sich von der radial außen liegenden Außenseite des Adapters nach innen erstreckt und in einen durch den Adapter verlaufenden Kanal, insbesondere in den dritten Kanal, mündet. Die Nut oder Einsenkung kann einen Teil der Zwischenabsaugung darstellen, um Gas, wie etwa Luft aus der Atmosphäre, das im Bereich der äußeren, zweiten Dichtung eindringt, über den Kanal abzusaugen.

Die erste Dichtung und/oder die zweite Dichtung kann eine erfindungsgemäße Dichtung sein, also insbesondere eine Dichtung mit einem Metallkörper und einem Mantel aus einem nicht-metallischen Material. Es kann sich bei der ersten Dichtung und/oder der zweiten Dichtung auch um eine herkömmliche Dichtung, wie etwa eine O-Ring-Dichtung, z.B. aus PTFE, handeln.

In dem Adapter kann wenigstens ein zweiter Kanal verlaufen, welcher an der Unterseite des Adapters in einen zweiten Einlass der Vakuumpumpe mündet, wenn der Adapter bestimmungsgemäß zwischen der Vakuumpumpe und dem Rezipient angeordnet ist, wobei der zweite Kanal wenigstens eine Auslassöffnung an der sich zwischen der Oberseite und der Unterseite erstreckenden, radialen Außenseite des Adapters aufweist. Der zweite Kanal kann als Zwischenabsaugung dienen, insbesondere zur Evakuierung des Ringvolumens, welches sich zwischen der Außenseite des Adapters und der Innenseite der Wandung des Rezipients erstrecken kann.

In der Anschlussfläche der Vakuumpumpe kann noch ein weiterer, dritter Einlass, insbesondere ein weiterer Nebeneinlass, vorgesehen sein. Im Adapter kann ein weiterer, dritter Kanal verlaufen, der an der Unterseite des Adapters in den dritten Einlass der Vakuumpumpe mündet, wenn der Adapter bestimmungsgemäß zwischen der Vakuumpumpe und dem Rezipient angeordnet ist, wobei der dritte Kanal wenigstens eine Auslassöffnung an der Außenseite des Adapters aufweist. Der dritte Kanal des Adapters und der dritte Einlass der Vakuumpumpe können, wie vorstehend bereits erwähnt wurde, als weitere Zwischenabsaugung dienen.

Die wenigstens eine Auslassöffnung des dritten Kanals kann in axialer Richtung gesehen versetzt zu der wenigstens einen Auslassöffnung des zweiten Kanals an der Außenseite des Adapters ausgebildet sein.

Zwischen der wenigstens einen Auslassöffnung des zweiten Kanals und der wenigstens einen Auslassöffnung des dritten Kanals kann an der Außenseite des Adapters eine umlaufende Anlagefläche für eine umlaufende, dritte Dichtung vorgesehen sein.

Besonders bevorzugt besteht der Adapter aus einem zylinderförmigen ersten Teil und einem zylinderförmigen zweiten Teil, wobei die zwei Teile insbesondere in einem Stück ausgebildet sind. Der erste Teil bildet wenigstens annähernd die obere Hälfte des Adapters, während der zweite Teil wenigstens näherungsweise die untere Hälfte des Adapters bildet. Der erste Teil erstreckt sich daher von der Oberseite aus gesehen in Richtung Unterseite. In etwa auf der halben Höhe des Adapters geht der erste Teil in den zweiten Teil über, der sich bis zur Unterseite erstreckt. Die beiden Teile sind konzentrisch miteinander ausgerichtet. Der zweite Teil weist einen größeren Durchmesser auf als der erste Teil. Dadurch ergibt sich am Übergang vom unteren Ende des ersten Teils zum oberen Ende des zweiten Teils eine an der Außenseite umlaufende Stufe, die als Anlagefläche für die dritte Dichtung vorgesehen ist.

Anstelle einer Zylinderform können die beiden Teile auch eine andere Form aufweisen, zum Beispiel eine Kegelstumpfform.

An der Innenseite der Wandung des Rezipients kann eine komplementäre Stufe ausgestaltet sein, welche eine Gegenfläche für die Dichtung bildet. Die dritte Dichtung kann dann zwischen der Anlagefläche an der Außenseite des Adapters und der Gegenfläche an der Innenseite der Wandung des Rezipients eingeklemmt werden.

Die dritte Dichtung kann eine erfindungsgemäße Dichtung sein oder eine herkömmliche Dichtung, wie etwa eine O-Ring-Dichtung aus zum Beispiel PTFE.

Die Auslassöffnungen an der Außenseite des Adapters können in Umfangsrichtung der Außenseite gesehen einen Versatz aufweisen.

Der Adapter kann an seiner Unterseite eine Anlagefläche, insbesondere in Form einer umlaufenden Nut oder Einsenkung, für eine vierte Dichtung aufweisen. Die vierte Dichtung kann dabei so ausgestaltet sein, dass diese Dichtung die Auslassöffnungen von allen Kanälen im Adapter umgibt und somit gegeneinander trennt. Alternativ kann die Dichtung zumindest zweiteilig ausgestaltet sein, wobei eine Dichtung um die Auslassöffnung des ersten und zweiten Kanals verläuft, während die andere Dichtung nur um die Auslassöffnung des ersten Kanals verläuft.

An der Unterseite des Adapters kann eine, insbesondere als weitere Zwischenabsaugung dienende Nut oder Einsenkung vollständig um die dort liegende Auslassöffnung des ersten Kanals verlaufen, wobei die Nut oder Einsenkung in den zweiten oder dritten Kanal mündet.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine geschnittene Ansicht eines Vakuumsystems,
- Fig. 7: eine Draufsicht auf eine Variante einer Vakuumdichtung,
- Fig. 8: eine Querschnittsansicht der Vakuumdichtung von Fig. 7 längs der Schnittlinie A-A,
- Fig. 9: eine Querschnittsansicht einer erfindungsgemäß abgewandelten Variante der Vakuumdichtung von Fig. 7 längs der Schnittlinie A-A,
- Fig. 10: eine Querschnittsansicht einer weiteren Variante einer Vakuumdichtung,
- Fig. 11: eine Querschnittsansicht noch einer weiteren Variante einer Vakuumdichtung,
- Fig. 12: einen Querschnitt durch eine Variante eines Vakuumsystems mit einer Vakuumpumpe, einem Rezipient und einem Adapter zum vakuumdichten Verbinden der Vakuumpumpe mit dem Rezipient,
- Fig. 13: eine perspektivische Ansicht der Vakuumpumpe des Vakuumsystems von Fig. 12,
- Fig. 14: eine Draufsicht auf den Einlassbereich der Vakuumpumpe von Fig. 13,
- Fig. 15: eine Draufsicht auf die Vakuumpumpe und den Adapter des Vakuumsystems von Fig. 12,
- Fig. 16: eine perspektivische Ansicht der Vakuumpumpe und des Adapters des Vakuumsystems von Fig. 12,
- Fig. 17: eine perspektivische Ansicht des Adapters,
- Fig. 18: eine weitere perspektivische Ansicht des Adapters, und
- Fig. 19: eine Ansicht einer als Formteil ausgestalteten Dichtung.

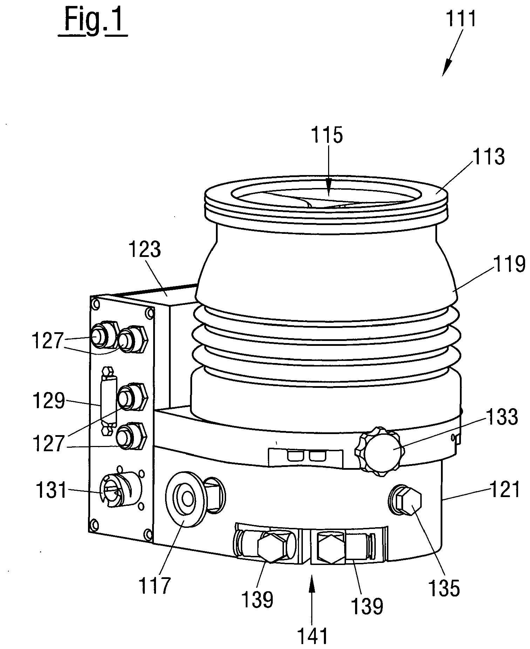

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

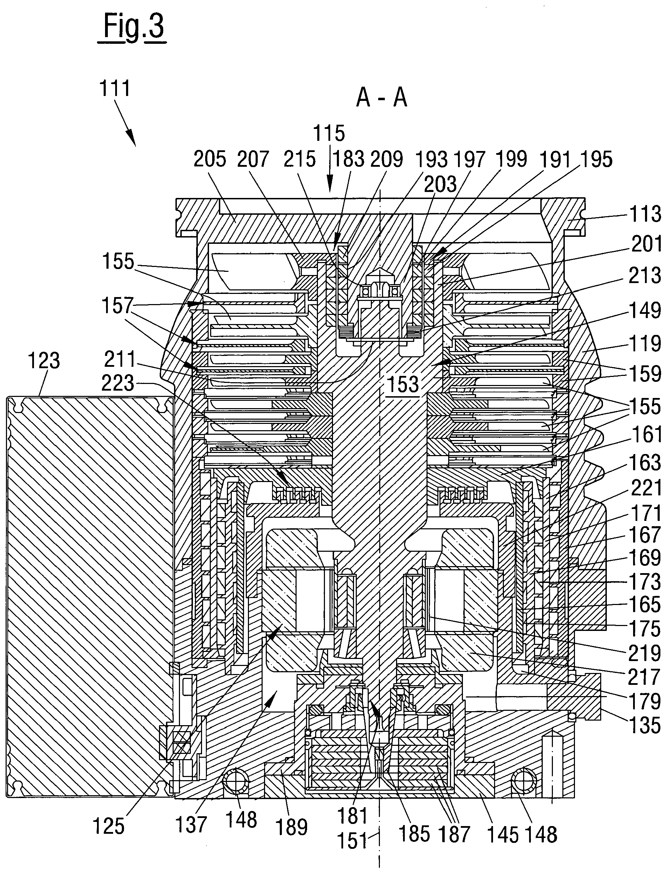

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

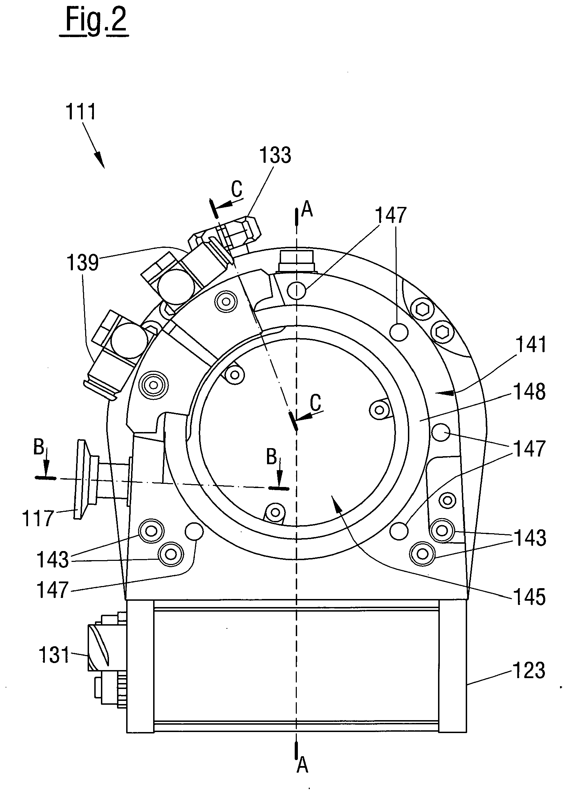

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

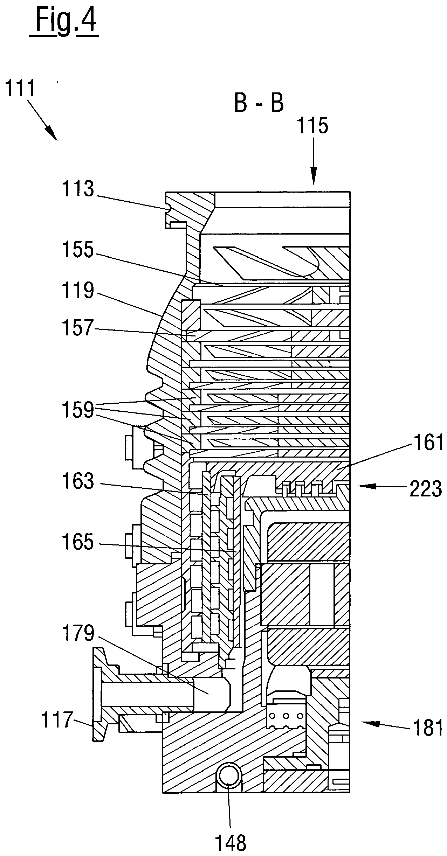

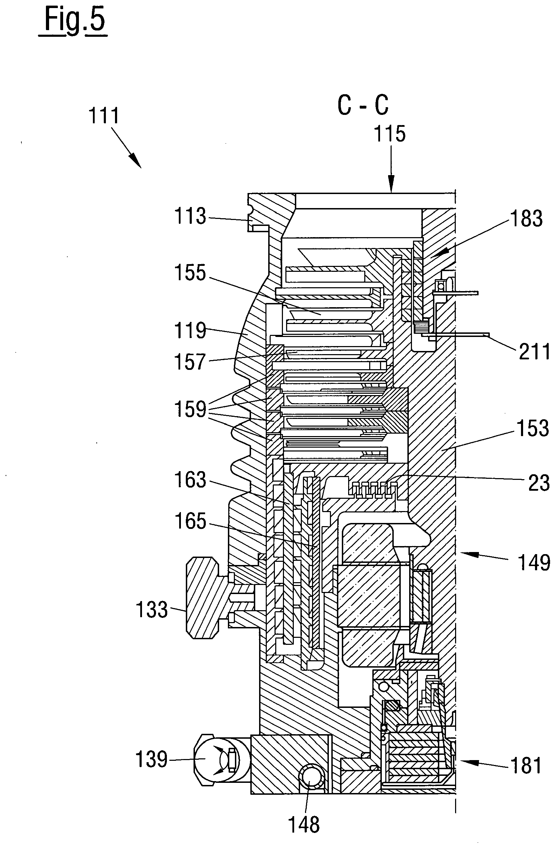

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

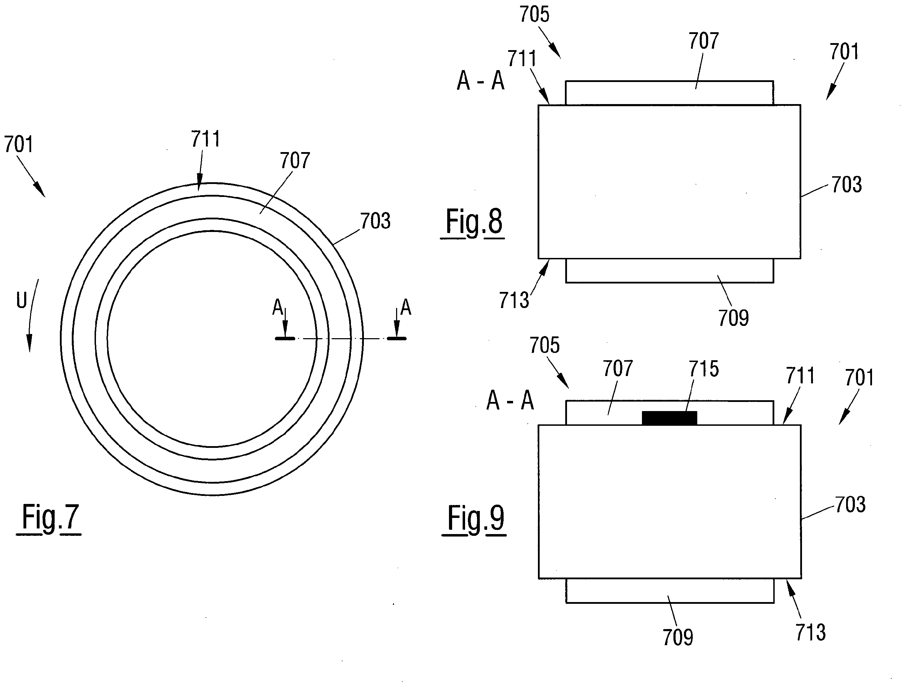

Wenn an den Einlassflansch 113 ein nicht dargestellter Rezipient angeschlossen ist oder wird, dann kann zwischen dem Einlassflansch 113 und dem Auslassflansch des Rezipients eine erfindungsgemäße Vakuumdichtung 701 angeordnet sein bzw. angeordnet werden, wie sie nachfolgend beispielhaft mit Bezug auf die Fig. 9 näher beschrieben wird. Dadurch lassen sich besonders niedrige Enddrücke erreichen.

Alternativ oder auch zusätzlich kann an derjenigen Oberfläche bzw. Seite des Einlassflanschs 113, welche bei angeschlossenem Rezipienten dem Ausgangsflansch des Rezipienten zugewandt ist, ein vollständig in Richtung des Flanschs 113 umlaufender Mantel (nicht gezeigt) aus einem nicht-metallischen Material, wie etwa PTFE, angeordnet sein. Ein korrespondierender Mantel kann optional auch an der dem Einlassflansch 113 zugewandten Seite des Auslassflanschs des Rezipienten angeordnet sein. Dadurch kann ein Vakuumsystem mit der Vakuumpumpe 111 und dem Rezipienten geschaffen werden, bei welchem keine zusätzliche Dichtung zwischen dem Einlassflansch 113 und dem Auslassflansch benötigt wird.

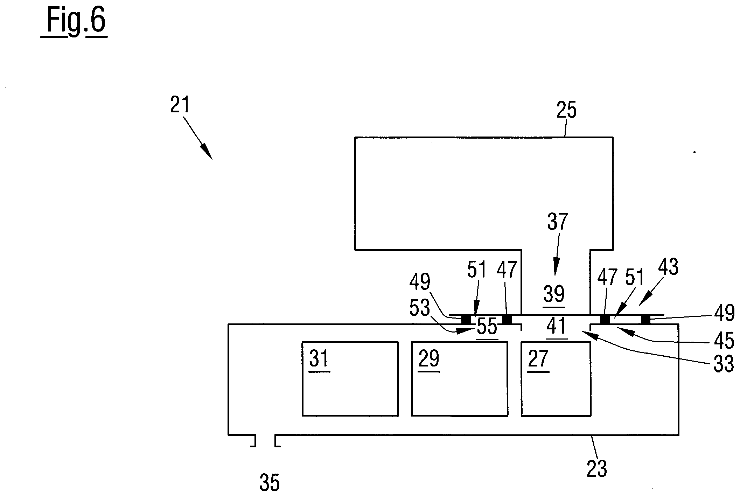

Das in Fig. 6 gezeigte Vakuumsystem 21 umfasst eine Vakuumpumpe 23 und einen Rezipienten 25. Bei der Vakuumpumpe 23 handelt es sich um eine Turbomolekularpumpe mit einer ersten Pumpstufe 27, einer zweiten Pumpstufe 29 und einer dritten Pumpstufe 31. Die Pumpstufen 27, 29 und 31 sind in Serie angeordnet und zum Pumpen eines Fluids, wie etwa Luft, aus dem Rezipienten 25 und von einem Einlass 33 der Vakuumpumpe 23 zu einem Auslass 35 der Vakuumpumpe 23, an den eine weitere Vakuumpumpe angeschlossen sein kann, vorgesehen.

Bei der ersten Pumpstufe 27 kann es sich um eine turbomolekulare Pumpstufe mit mehreren an einer Rotorwelle befestigten Rotorscheiben und in axialer Richtung zwischen den Rotorscheiben angeordneten Statorscheiben handeln. Bei der zweiten Pumpstufe 29 und der dritten Pumpstufe 31 kann es sich um ineinander geschachtelte Holweck-Stufen handeln. Allerdings sind auch andere Konfigurationen möglich. Beispielsweise kann die zweite Pumpstufe 29 eine weitere turbomolekulare Pumpstufe sein, während nur die dritte Pumpstufe 31 eine Holweck-Pumpstufe ist.

Wie Fig. 6 zeigt, ist ein Auslass 37 des Rezipienten 25 an den Einlass 33 der Vakuumpumpe 23 angeschlossen. Dabei ist in an sich bekannter Weise eine im Auslass 37 vorgesehene Auslassöffnung 39 mit einer am Einlass 33 vorgesehenen Einlassöffnung 41 ausgerichtet. Außerdem ist ein als Auslassflansch 43, der hierin auch als Auslassabschnitt 43 bezeichnet wird, um die Auslassöffnung 39 herum vorgesehen. Der Auslassflansch steht einem um die Einlassöffnung 41 herum verlaufenden Einlassflansch 45, welcher auch als Einlassabschnitt 45 bezeichnet wird, gegenüber.

Zwischen dem Einlassflansch 45 und dem Auslassflansch 43 ist eine um die Einlassöffnung 41 herum verlaufende erste, innere Dichtung 47 angeordnet. Radial außerhalb der ersten Dichtung 47 ist eine ebenfalls um die Einlassöffnung 41 herum verlaufende zweite, äußere Dichtung 49 angeordnet. Mittels der beiden Dichtungen 47, 49 wird der sich zwischen der Auslassöffnung 39 und der Einlassöffnung 41 erstreckende Verbindungskanal zwischen der Vakuumpumpe 23 und dem Rezipienten 25 abgedichtet.

Die beiden Dichtungen 47, 49 schließen ein Volumen 51 ein, das bei dem gezeigten Beispiel außerdem von den Außenwänden des Einlassflanschs 45 und des Auslassflanschs 43 begrenzt wird. Zum Evakuieren des Volumens 51 ist eine Absaugung 53 vorgesehen, die wenigstens eine Absaugöffnung 55 aufweist, über die das Volumen 51 mit der zweiten Pumpstufe 29 in Verbindung steht. Das Volumen 51 kann somit von der zweiten Pumpstufe 29 und der nachgeordneten dritten Pumpstufe 31 evakuiert werden.

Es sind auch andere Varianten zur Evakuierung des Volumens 51 möglich. Beispielweise kann das Volumen 51 nur über die dritte Pumpstufe 31 oder über eine separate Vakuumpumpe evakuiert werden.

Die äußere, zweite Dichtung 49 dichtet das Volumen 51 gegen Atmosphäre ab. Da im Volumen 51 somit ein Unterdruck herrscht, muss die innere, erste Dichtung 47 den Verbindungskanal zwischen den Öffnungen 39, 41 nicht gegenüber der Atmosphäre, sondern nur noch gegenüber dem im Volumen 51 herrschenden Unterdruck abdichten. Dadurch sind im Rezipienten 25 niedrigere Drücke erzielbar, insbesondere im Vergleich zur Verwendung von nur einer einzigen Dichtung anstelle der beiden Dichtung 47, 49 mit der Zwischenabsaugung 53.

Ferner ist bei dem Vakuumsystem 21 wenigstens eine der Dichtungen 47, 49 und vorzugsweise die innere, erste Dichtung 47 in Form einer erfindungsgemäßen Dichtung 701, wie sie nachstehend beispielhaft mit Bezug auf die Fig. 9 näher beschrieben wird, ausgebildet.

Die andere, vorzugsweise zweite Dichtung 49 kann in an sich bekannter Weise als ein O-Ring aus einem Elastomer, wie etwa PTFE, FKM oder Viton, ausgebildet sein.

Die in Fig. 7 in der Draufsicht gezeigte beispielhafte Variante einer Vakuumdichtung 701 umfasst einen ringartig geschlossenen Metallkörper 703, der z.B. aus Aluminium, einer Aluminiumlegierung oder aus, insbesondere weichgeglühtem, Kupfer ausgebildet ist. Die kreisrunde Form ist nur als Beispiel zu sehen. Alternativ kann die Vakuumdichtung 701 z.B. eine rechteckige Form haben. Insbesondere ist die Form so ausgestaltet, dass sich die Vakuumdichtung 701 in eine am Flansch ausgebildete, an sich bekannte umlaufende Nut zur Aufnahme der Dichtung einlegen lässt.

Wie aus der Querschnittsdarstellung der Fig. 8 ersichtlich ist, ist die Vakuumdichtung 701 und insbesondere der Metallkörper 703 in Art einer Flachdichtung ausgebildet. Der Metallkörper 703 weist einen Mantel 705 aus nicht-metallischem Material auf, welcher eine obere Schicht 707 und eine untere Schicht 709 aus nicht-metallischem Material umfasst. Die obere Schicht 707 ist auf einer Oberseite 711 des Metallkörpers 703 angeordnet, während die untere Schicht 709 auf einer Unterseite 713 des Metallkörpers 703 angeordnet ist. Die beiden Schichten 707 und 709 erstrecken sich in Umfangsrichtung U der Dichtung 701 gesehen vollumfänglich längs der jeweiligen Seite 711 bzw. 713. Die Oberseite 711 und somit die obere Schicht 707 sind einem nicht dargestellten Flansch zugewandt, und die Unterseite 713 und die untere Schicht 709 sind einem nicht dargestellten Gegenflansch zugewandt, wenn die Vakuumdichtung 701 bestimmungsgemäß zwischen Flansch und Gegenflansch angeordnet ist. Durch die Kombination aus Metallkörper 703 und Mantel 705 lässt sich eine besonders dichte Vakuumverbindung zwischen Flansch und Gegenflansch erzeugen, wodurch, wie vorstehend erläutert wurde, Drücke von unter 10⁻¹⁰ mbar realisierbar sind.

Die dargestellte Ausgestaltung des Mantels 705 in Fig. 8 ist nur als Beispiel zu sehen. Der Mantel 705 kann die Oberfläche des Metallkörpers 703 auch vollumfänglich umschließen, so dass die beiden Schichten 707, 709 eine zusammenhängende Schicht bilden, welche den Metallkörper 703 vollständig überdeckt.

Wie aus der Querschnittsansicht der Fig. 9 ersichtlich ist, unterscheidet sich die dort dargestellte, erfindungsgemäß abgewandelte Variante durch eine Erhebung 715 auf der Oberseite 711. Die Erhebung 715 erstreckt sich in Umfangsrichtung U gesehen über den vollen Umfang des Metallkörpers 703 und sie wird von dem Mantel 705, insbesondere der Schicht 707, überdeckt. Die Erhebung 715 wirkt als eine Art Schneidkante und verbessert dadurch die Abdichtwirkung der Vakuumdichtung 701. Die Höhe der Erhebung 715 kann z.B. im Bereich zwischen 0,1 und 0,5 mm liegen.

Der Mantel 705 und somit die beiden Schichten 707, 709 bestehen vorzugsweise aus einem Elastomer, wie etwa PTFE. Der Mantel 705 bzw. jede der Schichten 707, 709 kann als eine Beschichtung auf der Oberfläche des Metallkörpers 703 aufgebracht sein. Alternativ kann jede Schicht 707, 709 durch Laminieren oder ein anderes Fügeverfahren an der Oberfläche des Metallkörpers 703 angebracht sein.

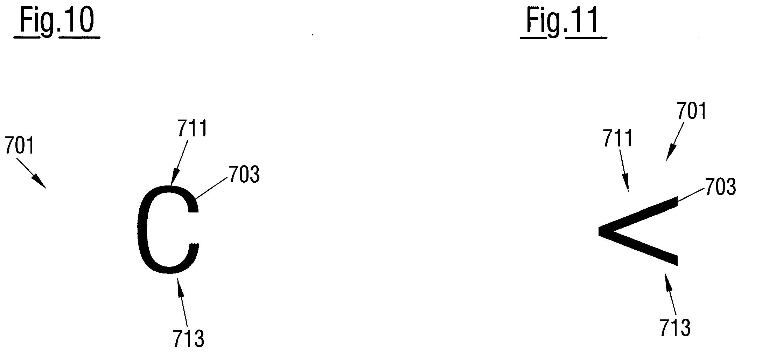

Die Querschnittsdarstellung der Fig. 10 zeigt eine weitere Variante einer Vakuumdichtung 701, bei welcher der Metallkörper 703 in Art eines federelastischen Dichtungselements in C-Form ausgestaltet ist. Nicht dargestellt ist der Mantel aus nicht-metallischem Material, welcher den Metallkörper 703 ganz oder teilweise umschließt. Eine jeweilige Schicht des Mantels aus nicht-metallischem Material kann vorzugsweise auf der Oberseite 711 bzw. auf der Unterseite 713 des Metallkörpers 703 angebracht werden, wobei die Oberseite 711 bzw. die Unterseite 713 einem Flansch bzw. Gegenflansch gegenüberliegt, wenn die Dichtung 701 bestimmungsgemäß zwischen Flansch und Gegenflansch eingelegt ist.

Fig. 11 zeigt eine Querschnittsansicht noch einer weiteren Variante einer Vakuumdichtung 701, bei der der Metallkörper 703 in Art eines federelastischen Dichtungselements in V-Form ausgestaltet ist. Nicht dargestellt ist wiederum der Mantel aus nicht-metallischem Material, welcher den Metallkörper 703 ganz oder teilweise umschließt. Die Vakuumdichtung 701 gemäß Fig. 11 wird derart zwischen Flansch und Gegenflansch eingelegt, dass die Unterseite 713, welche von einer Außenseite eines Schenkels des "V" gebildet wird, auf einem Flansch aufliegt, und die Oberseite 711, welche von der anderen Außenseite des "V" gebildet wird, dem Gegenflansch zugewandt ist. Daher werden bevorzugt zumindest die Oberseite 711 und die Unterseite 713 zumindest teilweise von einer jeweiligen Schicht des Mantels bedeckt (nicht dargestellt). Die Schicht erstreckt sich dabei vorzugsweise vollumfänglich auf der jeweiligen Seite 711, 713.

Die in Fig. 10 bzw. Fig. 11 gezeigte Vakuumdichtung 701 weist den Vorteil auf, dass der jeweilige Metallkörper 703 einfedern kann, wenn die Vakuumdichtung 701 zwischen Flansch und Gegenflansch eingespannt ist. Dadurch können Toleranzen der Dichtungspartner von der Dichtung 701 besser ausgeglichen werden.

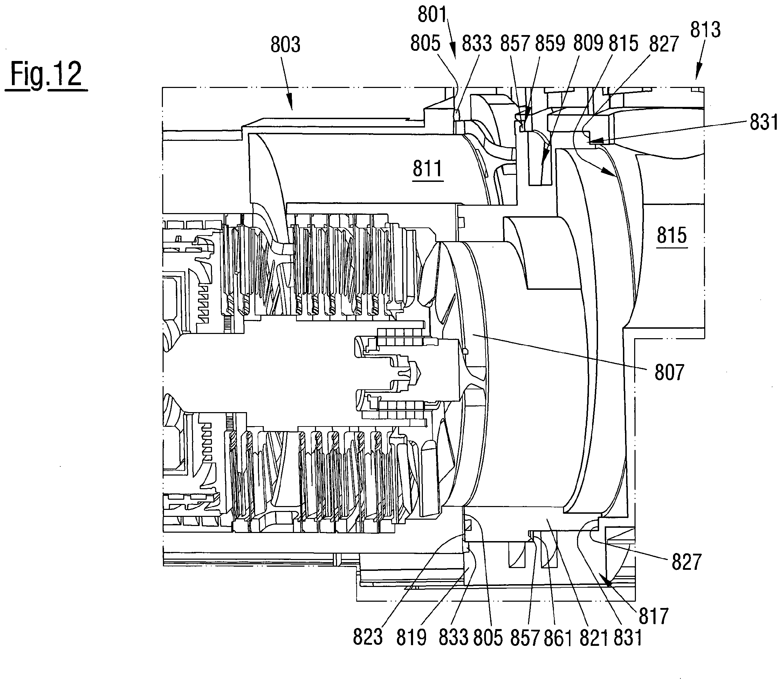

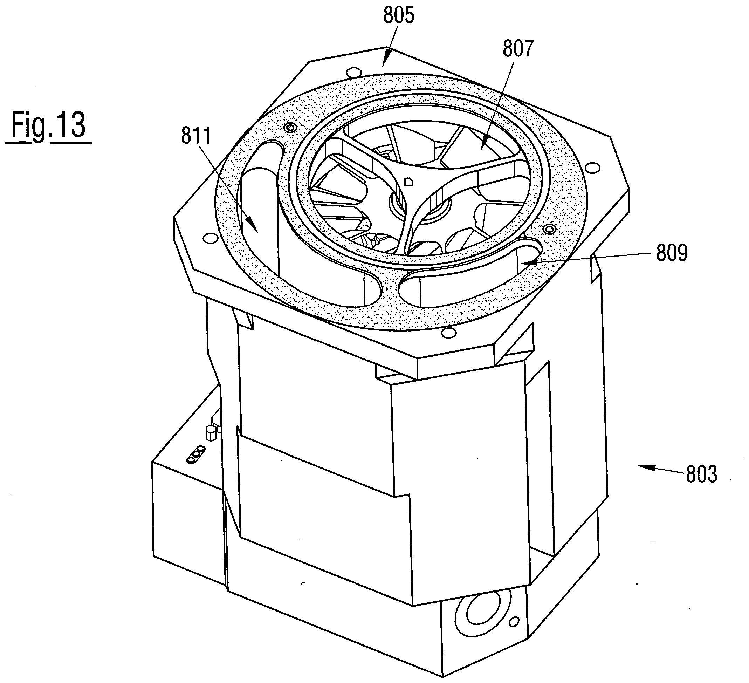

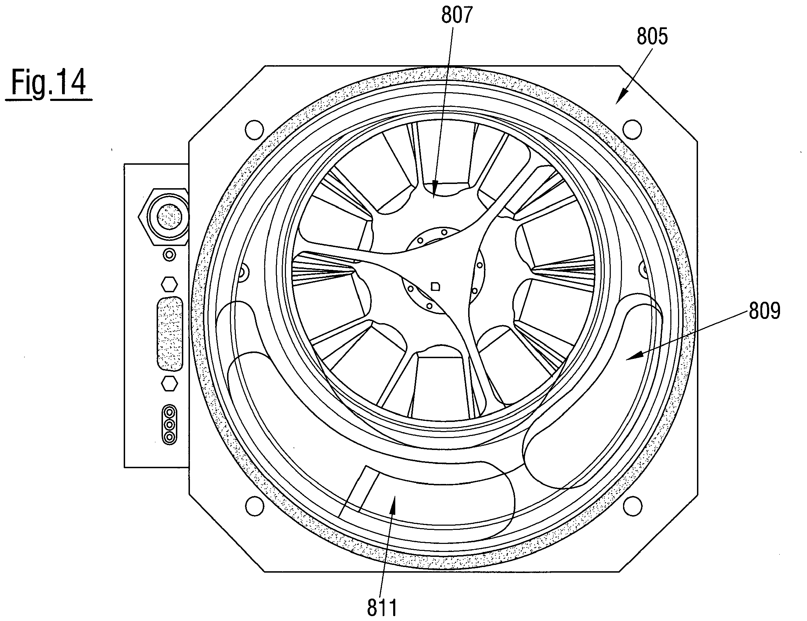

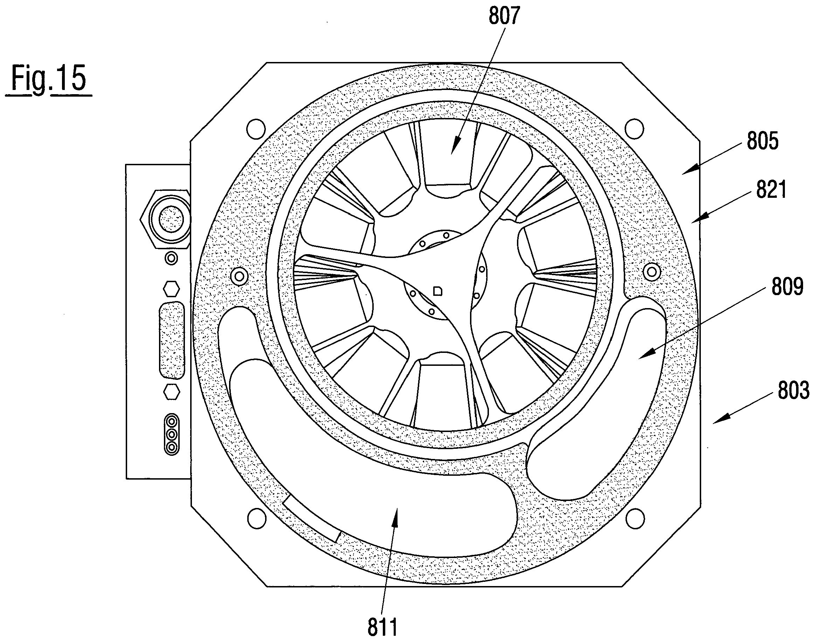

Das mit Bezug auf die Fig. 12 bis 19 beschriebene Vakuumsystem 801 umfasst eine Vakuumpumpe 803, die wenigstens eine Anschlussfläche 805 mit einem ersten Einlass 807, einem zweiten Einlass 809 und einem dritten Einlass 811 aufweist, einen Rezipient 813, der wenigstens einen Auslass 815 aufweist, den eine, insbesondere röhrenförmige, Wandung 817 umgibt, deren vom Auslass 815 entfernt liegende Frontseite 819 in Anlage mit der Anschlussfläche 805 der Vakuumpumpe 803 gebracht werden kann.

Das Vakuumsystem 801 umfasst außerdem einen, insbesondere zylinderartigen, Adapter 821 zur vakuumdichten Verbindung der Vakuumpumpe 803 mit dem Rezipient 813. Der Adapter 821 ist innerhalb der Wandung 817 des Rezipients 813 aufgenommen, wenn der Adapter 821 bestimmungsgemäß zwischen der Vakuumpumpe 803 und dem Rezipient 813 angeordnet ist. Die Wandung 817 umgibt bzw. umschließt dann den Adapter 821, wie in Fig. 12 gesehen werden kann.

Der Adapter 821 weist in axialer Richtung gesehen eine Länge auf, die zumindest im Wesentlichen der axialen Höhe der Wandung 817 des Rezipients 813 entspricht. Die axiale Höhe der Wandung entspricht zumindest im Wesentlichen dem Abstand zwischen der Ebene, in welcher die Mündung des Auslasses 815 in das von der Wandung 817 umschlossene Volumen vordem Auslass 815 liegt, zu der Ebene, in welcher die Frontseite 819 liegt. Durch die Dimensionierung des Adapters 821 wird erreicht, dass eine Unterseite 823 des Adapters 821 der Anschlussfläche 805 der Vakuumpumpe 803 und eine Oberseite 825 des Adapters 821 der den Auslass 815 umgebenden Anschlussfläche 827 des Rezipients 813 gegenüberliegt,

In dem Adapter 821 ist ein erster Kanal 829 zwischen der Unterseite 823 und der Oberseite 825 ausgebildet, welcher den ersten Einlass 807 der Vakuumpumpe 803 mit dem Auslass 815 des Rezipients 813 verbindet, wenn der Adapter 821 bestimmungsgemäß zwischen der Vakuumpumpe 803 und dem Rezipient 813 angeordnet ist. Zwischen der Oberseite 825 des Adapters 821 und der Anschlussfläche 827 des Rezipients 813 ist eine innere, erste Dichtung 831 und zwischen der Frontseite 819 der Wandung 817 des Rezipients 813 und der Anschlussfläche 805 der Vakuumpumpe 803 ist eine äußere, zweite Dichtung 833 angeordnet.

In dem Adapter 821 ist ein zweiter Kanal 835 ausgebildet, welcher an der Unterseite 823 des Adapters 821 eine Auslassöffnung 837 aufweist, welche mit dem zweiten Einlass 809 der Vakuumpumpe 803 ausgerichtet ist, wenn der Adapter 821 bestimmungsgemäß zwischen der Vakuumpumpe 803 und dem Rezipient 813 angeordnet ist. Der zweite Kanal 835 weist wenigstens eine Auslassöffnung 839 und im dargestellten Beispiel zwei Auslassöffnungen 839 an der sich zwischen der Oberseite 825 und der Unterseite 823 erstreckenden, radialen Außenseite 841 des Adapters 821 auf.

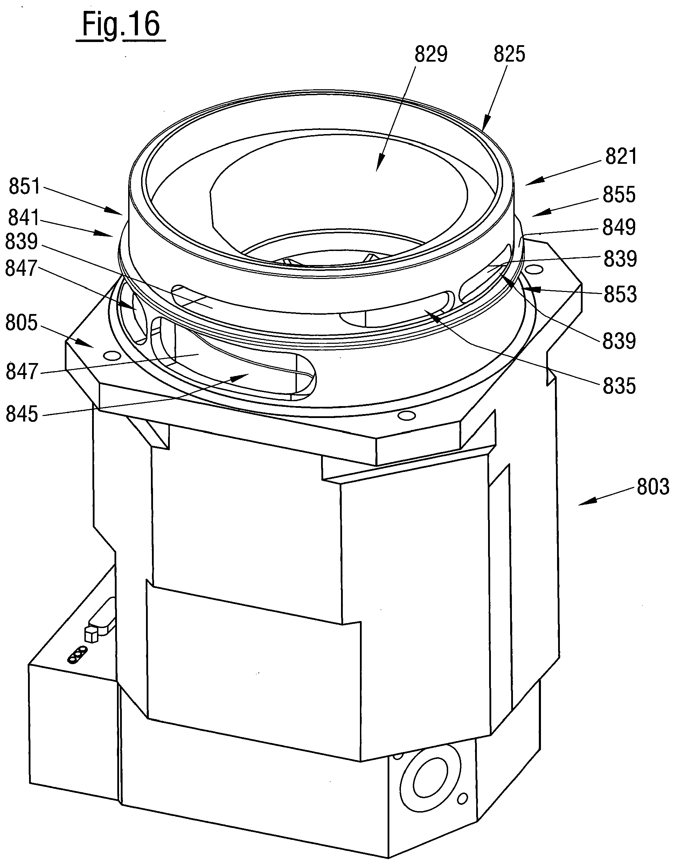

Eine an der Unterseite 823 liegende Auslassöffnung 843 eines dritten Kanals 845 ist mit dem dritten Einlass 811 ausgerichtet. Der dritte Kanal 845 verläuft im Adapter 821 und weist außerdem wenigstens eine Auslassöffnung 847 und im dargestellten Beispiel zwei Auslassöffnungen 847 an der Außenseite 841 des Adapters 821 auf. Die Auslassöffnungen 847 des dritten Kanals 845 sind in axialer Richtung A und in Umfangsrichtung U gesehen versetzt zu den Auslassöffnungen 839 des zweiten Kanals 835 an der Außenseite 841 angeordnet (vgl. Fig. 16).

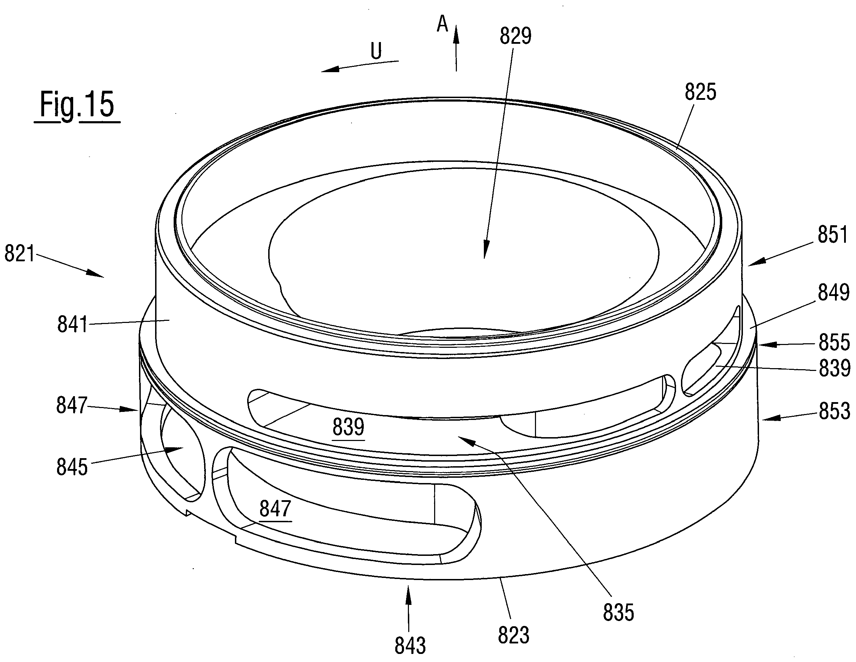

Zwischen den Auslassöffnungen 839 des zweiten Kanals 835 und den Auslassöffnungen 847 des dritten Kanals 845 ist an der Außenseite 841 des Adapters 821 eine Anlagefläche 849 für eine dritte Dichtung 857 (vgl. Fig. 12 und 17) ausgebildet, wobei sich die Anlagefläche 849 vollumfänglich längs des Außenumfangs um die Außenseite 841 erstreckt.

Die Anlagefläche 849 ergibt sich bei dem Adapter 821 dadurch, dass dieser aus einem wenigstens annähernd zylinderförmigen ersten Teil 851 und einem wenigstens annähernd zylinderförmigen zweiten Teil 853 gebildet ist. Die beiden Teile 851 und 853 sind beispielsweise einstückig miteinander ausgebildet. Der erste Teil 851 bildet, zumindest näherungsweise, die obere Hälfte des Adapters 821 während der zweite Teil 853 wenigstens näherungsweise die untere Hälfte des Adapters 821 bildet. Der erste Teil 851 erstreckt sich von der Oberseite 825 aus gesehen in Richtung Unterseite 823. In etwa auf der halben Höhe des Adapters 821 geht der erste Teil 851 in den zweiten Teil 853 des Adapters 821 über, der sich bis zur Unterseite 823 erstreckt. Die beiden Teile 851, 853 sind konzentrisch miteinander ausgebildet. Der zweite Teil 853 weist jedoch einen größeren Durchmesser auf als der erste Teil 851. Dadurch ergibt sich am Übergang vom unteren Ende des ersten Teils 851 zum oberen Ende des zweiten Teils 853 eine an der Außenseite 841 umlaufende Stufe 855, deren obere Seite die Anlagefläche 849 für die dritte Dichtung 857 ist.

An der Innenseite der Wandung 817 des Rezipients 813 ist eine komplementäre Stufe 859 ausgestaltet, deren obere Seite eine Gegenfläche 861 für die dritte Dichtung 857 bildet. Die dritte Dichtung 857 ist somit zwischen der Anlagefläche 849 und der Gegenfläche 861 eingeklemmt bzw. eingepresst, wenn der Adapter 821 in dem Vakuumsystem 801 bestimmungsgemäß zwischen der Vakuumpumpe 803 und dem Rezipient 813 angeordnet ist.

Die obere, erste Dichtung 831 umgibt an der Oberseite 825 des Adapters 821 den Auslass 815 bzw. den ersten Kanal 829. Die untere, zweite Dichtung 833 bewirkt eine Abdichtung nach außen zur Atmosphäre. Die dritte Dichtung 857, welche in axialer Richtung gesehen zwischen der ersten und zweiten Dichtung 831, 833 liegt, ist zwischen dem Adapter 821 und der Wandung 817 eingepresst. Die dritte Dichtung 857 trennt das Volumen zwischen der Innenseite der Wandung 817 und der Außenseite 841 des Adapters 821, in welches der zweite Kanal 835 mündet, von dem Volumen zwischen der Innenseite der Wandung 817 und der Außenseite 841 des Adapters 821, in welches der dritte Kanal 845 mündet.

Das Volumen, in welches der zweiten Kanal 835 mündet, wird dabei mittels des zweiten Einlasses 809 der Vakuumpumpe 803 evakuiert, während das Volumen, in welches der dritte Kanal 845 mündet, mittels des dritten Einlasses 811 evakuiert wird. Jeder der beiden Einlässe 809, 811 ist in der Vakuumpumpe 803 an wenigstens eine Pumpstufe der Vakuumpumpe 803 angeschlossen.

Die beiden Einlässe 809, 811 weisen ein Saugvermögen auf, welches geringer ist als das Saugvermögen am ersten Einlass 807. Die beiden Einlässe 809, 811 fungieren als Nebeneinlässe bzw. in Kombination mit den beiden Kanälen 835, 845 als Zwischenabsaugungen für die genannten Volumina, wodurch der erreichbare Enddruck im Auslass 815 verringert werden kann.

In eines der genannten Volumina kann auch ein weiterer Auslass einer Kammer des Rezipients 813 mündet, so dass die Kammer über die jeweilige Zwischenabsaugung evakuiert werden kann (nicht gezeigt).

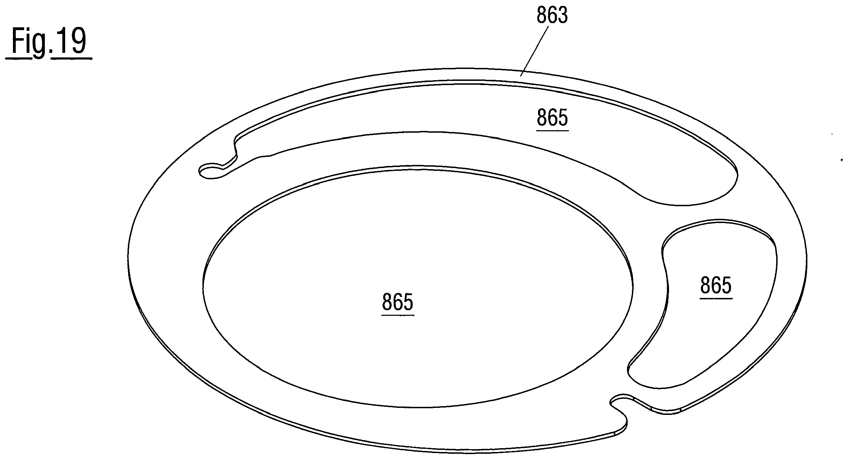

Zwischen der Unterseite 823 des Adapters 821 und der Anschlussfläche 805 der Vakuumpumpe 803 kann noch eine weitere, vierte Dichtung 863 angeordnet werden, die gemäß Fig. 19 als Formteil ausgestaltet sein kann.

Die vierte Dichtung 863 ist als eine Platte aus Dichtungsmaterial, zum Beispiel PTFE, ausgebildet, dessen Außenkontur zumindest im Wesentlichen der Kontur des Einlassbereichs der Vakuumpumpe 803 entspricht. Die vierte Dichtung 863 weist außerdem drei Durchgänge 865 auf, die mit den Auslassöffnungen der drei Kanäle 829, 835, 845 in Deckung gebracht werden können, wenn die vierte Dichtung 863 in Anlage mit der Unterseite 823 ist. Die vierte Dichtung 863 trennt somit die drei Kanäle 829, 835, 845 an der Unterseite 823 des Adapters 821 voneinander.

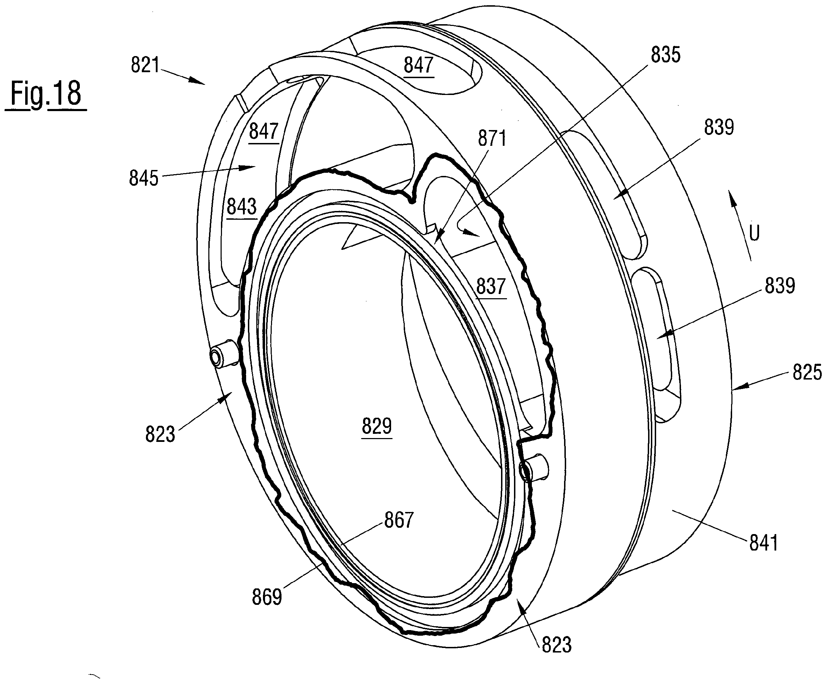

Die vierte Dichtung 863 kann auch zweiteilig ausgebildet sein, wie mit Bezug auf Fig. 18 beschrieben ist. Eine separate Dichtung 867 verläuft dabei um die Auslassöffnung des ersten Kanals 829 während eine weitere separate Dichtung 869 um die Auslassöffnung des ersten Kanals 829 und um die Auslassöffnung 837 des zweiten Kanals 835 verläuft.

An der Unterseite 823 ist eine Nut 871 ausgebildet, die um die Auslassöffnung des ersten Kanals 829 vollumfänglich umläuft und in den zweiten Kanal 835 mündet. Die Nut 871 dient somit als Zwischenabsaugung um die separate Dichtung 867 herum, wodurch das Vakuum im ersten Kanal 829 verbessert werden kann.

### Bezugszeichenliste

- 21: Vakuumsystem
- 23: Vakuumpumpe
- 25: Rezipient
- 27: erste Pumpstufe
- 29: zweite Pumpstufe
- 31: dritte Pumpstufe
- 33: Einlass
- 35: Auslass
- 37: Auslass
- 39: Auslassöffnung
- 41: Einlassöffnung
- 43: Auslassflansch, Auslassabschnitt
- 45: Einlassflansch, Einlassabschnitt
- 47: erste Dichtung
- 49: zweite Dichtung
- 51: Volumen
- 53: Absaugung
- 55: Absaugöffnung
- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 701: Vakuumdichtung
- 703: Metallkörper
- 705: Mantel
- 707: obere Schicht
- 709: untere Schicht
- 711: Oberseite
- 713: Unterseite
- 715: Erhebung
- 801: Vakuumsystem
- 803: Vakummpumpe
- 805: Anschlussfläche
- 807: erster Einlass
- 809: zweiter Einlass
- 811: dritter Einlass
- 813: Rezipient
- 815: Auslass
- 817: Wandung
- 819: Frontseite
- 821: Adapter
- 823: Unterseite
- 825: Oberseite
- 827: Anschlussfläche am Rezipient
- 829: erster Kanal
- 831: erste Dichtung
- 833: zweite Dichtung
- 835: zweiter Kanal
- 837: Auslassöffnung
- 839: Auslassöffnung
- 841: Außenseite
- 843: Auslassöffnung
- 845: dritter Kanal
- 847: Auslassöffnung
- 849: Anlagefläche
- 851: erster Teil
- 853: zweiter Teil
- 855: Stufe
- 857: dritte Dichtung
- 859: Stufe
- 861: Gegenfläche
- 863: vierte Dichtung
- 865: Durchgang
- 867: Dichtung
- 869: Dichtung
- 871: Nut

- A: axiale Richtung
- U: Umfangsrichtung

## Patentansprüche

1. Vakuumdichtung (701) zum Abdichten einer Verbindung zwischen zwei Dichtflächen, insbesondere Flanschen (43, 45, 113), insbesondere einem Auslass (43) eines Rezipienten (25) und einem Einlass (45, 113) einer Vakuumpumpe (23, 111), insbesondere Turbomolekularpumpe,
wobei die Dichtung (701) einen ringartig geschlossenen Metallkörper (703) aufweist,
wobei am Metallkörper (703) ein Mantel (705) aus einem nicht-metallischen Material angeordnet ist,
wobei der Metallkörper (703) zwei Oberflächenseiten (711, 713) aufweist, wobei eine der Oberflächenseiten (711) der einen Dichtfläche und die andere der Oberflächenseiten (713) der anderen Dichtfläche zugewandt ist, wenn die Dichtung (701) bestimmungsgemäß zwischen den beiden Dichtflächen angeordnet ist,
**dadurch gekennzeichnet,**
**dass** wenigstens eine der beiden Oberflächenseiten (711) eine in Umfangsrichtung U der Dichtung (701) umlaufende und aus der Oberflächenseite (711) hervorstehende Erhebung (715) aufweist, wobei der Mantel (705) die Erhebung (715) überdeckt.

2. Dichtung (701) nach Anspruch 1,
**dadurch gekennzeichnet, dass**
der Metallkörper (703) in Art eines federelastischen Dichtungselements oder in Art einer Flachdichtung ausgebildet ist, und/oder der Metallkörper (703) Aluminium, eine Aluminiumlegierung oder Kupfer, insbesondere weichgeglühtes Kupfer, aufweist oder daraus besteht.

3. Dichtung (701) nach einem der vorhergehenden Ansprüche,
**dadurch gekennzeichnet, dass**
der Mantel (705) wenigstens eine Schicht (707, 709) aus dem nicht-metallischen Material umfasst, die auf einem Teil der Oberfläche des Metallkörpers (703) angeordnet ist, und/oder
dass der Mantel (705) ein Elastomer oder einen anderen nicht oder nur geringfügig ausgasenden Kunststoff aufweist oder daraus besteht.

4. Dichtung (701) nach Anspruch 3,
**dadurch gekennzeichnet, dass**
es sich bei dem Elastomer um PTFE oder um einen auf PTFE basierenden Werkstoff, wie etwa PFA, TFM oder FEP, handelt, wobei, bevorzugt, das Elastomer einen Füllstoff aufweist.

5. Dichtung (701) nach einem der vorhergehenden Ansprüche,
**dadurch gekennzeichnet, dass**
der Mantel (705) in Art einer Beschichtung auf dem Metallkörper (703) aufgebracht ist, oder mittels eines, insbesondere stoffschlüssigen, formschlüssigen oder thermischen, Fügeverfahrens, wie etwa Lamination oder Schrumpfen, auf dem Metallkörper (703) angebracht ist, und/oder der Mantel (705) die Oberfläche des Metallkörpers (703) vollständig oder nur teilweise umgibt.

6. Dichtung (701) nach einem der vorhergehenden Ansprüche,
**dadurch gekennzeichnet, dass**
die Erhebung (715) eine Höhe von 0,05 mm bis 0,2 mm oder von 0,05 mm bis 0,5 mm aufweist.

7. Mehrfach- oder Doppeldichtung zum Abdichten einer Verbindung zwischen zwei Dichtflächen, insbesondere Flanschen (43, 45), insbesondere zwischen einem Auslass (43) eines Rezipienten (25) und einem Einlass (45) einer Vakuumpumpe (23), insbesondere Turbomolekularpumpe, wobei die Mehrfach- oder Doppeldichtung wenigstens eine erste Dichtung (47) und eine zweite Dichtung (49) aufweist, die zwischen den Dichtflächen, insbesondere Flanschen (43, 45), derart angeordnet werden können, dass die zweite Dichtung (49) die erste Dichtung (47) in einem Abstand zur ersten Dichtung (47) umschließt, wobei eine der beiden Dichtungen (47, 49) und bevorzugt die erste, innere Dichtung (47) eine Dichtung (701) gemäß einem der vorhergehenden Ansprüche ist.

8. Doppeldichtung nach Anspruch 7,
**dadurch gekennzeichnet, dass**
die erste Dichtung (47) und die zweite Dichtung (49) jeweils einen ringartig geschlossenen Metallkörper (703) aufweisen, wobei vorzugsweise die Metallkörper (703) der beiden Dichtungen (47, 49) einstückig miteinander, und bevorzugt voneinander trennbar, ausgebildet sind.

9. Vakuumsystem (21) mit wenigstens einer ersten Vakuumeinrichtung, insbesondere Vakuumpumpe (23), vorzugsweise Turbomolekularpumpe, und wenigstens einer zweiten Vakuumeinrichtung, insbesondere Rezipient (25), wobei ein Auslass, insbesondere Auslassflansch (43), der zweiten Vakuumeinrichtung mit einem Einlass, insbesondere Einlassflansch (45), der ersten Vakuumeinrichtung lösbar verbunden oder verbindbar ist, wobei zwischen dem Auslass und dem Einlass wenigstens eine Dichtung (701) nach einem der Ansprüche 1 bis 6 oder wenigstens eine Mehrfach- oder Doppeldichtung nach Anspruch 7 oder 8 angeordnet ist.

10. Vakuumsystem nach Anspruch 9,
**dadurch gekennzeichnet, dass**
am Auslass und/oder am Einlass wenigstens eine, vorzugsweise in Umlaufrichtung der jeweiligen Dichtfläche umlaufende, Schneidkante zum Zusammenwirken mit der Dichtung (701) ausgebildet ist, wobei die Schneidkante eine Höhe zwischen 0,05 mm und 0,2 mm oder zwischen 0,05 mm und 0,5 mm aufweist.

11. Vakuumsystem mit wenigstens einer ersten Vakuumeinrichtung, insbesondere Vakuumpumpe (23), vorzugsweise Turbomolekularpumpe, und wenigstens einer zweiten Vakuumeinrichtung, insbesondere einem Rezipienten (25), wobei ein Auslass, insbesondere Auslassflansch (43), der zweiten Vakuumeinrichtung mit einem Einlass, insbesondere Einlassflansch (45), der ersten Vakuumeinrichtung lösbar verbunden oder verbindbar ist, wobei wenigstens auf der dem Einlass (45) zugewandten Oberfläche des Auslasses (43) und/oder wenigstens auf der dem Auslass (43) zugewandten Oberfläche des Einlasses (45) ein in Umfangsrichtung des Ein- bzw. Auslasses umlaufender Mantel aus einem nicht-metallischen Material angeordnet ist, **dadurch gekennzeichnet,**
**dass** wenigstens eine der beiden Oberflächen eine in die Umfangsrichtung umlaufende und aus der Oberfläche hervorstehende Erhebung (715) aufweist, wobei der Mantel (705) die Erhebung (715) überdeckt.

12. Vakuumpumpe (23, 111), insbesondere Turbomolekularpumpe, mit einem Einlass, insbesondere Einlassflansch (45, 113), zum Anschließen eines Auslasses, insbesondere Auslassflansch (43), eines Rezipienten (25), wobei wenigstens an der Oberfläche des Einlasses (45, 113), welche bei angeschlossenem Rezipient (25) dem Auslass (43) zugewandt ist, ein in Umfangsrichtung des Einlasses umlaufender Mantel aus einem nicht-metallischen Material angeordnet ist,
**dadurch gekennzeichnet,**
**dass** die Oberfläche eine in die Umfangsrichtung umlaufende und aus der Oberfläche hervorstehende Erhebung (715) aufweist, wobei der Mantel (705) die Erhebung (715) überdeckt.

## Claims

1. A vacuum seal (701) for sealing a connection between two sealing surfaces, in particular flanges (43, 45, 113), in particular an outlet (43) of a recipient (25) and an inlet (45, 113) of a vacuum pump (23, 111), in particular of a turbomolecular pump,
wherein the seal (701) has a metal body (703) closed in ring shape; wherein a jacket (705) composed of a non-metallic material is arranged at the metal body (703); and
wherein the metal body (703) has two surface sides (711, 713), with one of the surface sides (711) facing the one sealing surface and the other one of the surface sides (713) facing the other sealing surface when the seal (701) is arranged as intended between the two sealing surfaces,
**characterized in that**
at least one of the two surface sides (711) has an elevated portion (715) running around in the peripheral direction U of the seal (701) and projecting from the surface side (711), with the jacket (705) covering the elevated portion (715).

2. A seal (701) in accordance with claim 1,
**characterized in that**
the metal body (703) is configured in the manner of a spring-elastic sealing element
or in the manner of a flat seal; and/or
**in that** the metal body (703) comprises or consists of aluminum, an aluminum alloy or copper, in particular soft-annealed copper.

3. A seal (701) in accordance with one of the preceding claims, **characterized in that**
the jacket (705) comprises at least one layer (707, 709) of the non-metallic material which is arranged on a part of the surface of the metal body (703); and/or
**in that** the jacket (705) comprises or consists of an elastomer or of another plastic which does not degas or only degases slightly.

4. A seal (701) in accordance with claim 3,
**characterized in that**
the elastomer is PTFE or a material based on PTFE such as PFA, TFM or FEP, with, preferably, the elastomer having a filler material.

5. A seal (701) in accordance with any one of the preceding claims, **characterized in that**
the jacket (705) is applied to the metal body (703) in the manner of a coating or is applied to the metal body (703) by means of a joining process, in particular a bonded, form-fitting or thermal joining process, such as lamination or shrinking; and/or
**in that** the jacket (705) completely or only partly surrounds the surface of the metal body (703).

6. A seal (701) in accordance with any one of the preceding claims, **characterized in that**
the elevated portion (715) has a height of 0.05 mm to 0.2 mm or of 0.05 mm to 0.5 mm.

7. A multiple seal or double seal for sealing a connection between two sealing surfaces, in particular flanges (43, 45), in particular between an outlet (43) of a recipient (25) and an inlet (45) of a vacuum pump (23), in particular of a turbomolecular pump, wherein the multiple seal or double seal comprises at least a first seal (47) and a second seal (49) which can be arranged between the sealing surfaces, in particular flanges (43, 45), such that the second seal (49) surrounds the first seal (47) at a spacing from the first seal (47), with one of the two seals (47, 49) and preferably the first, inner seal (47) being a seal (701) in accordance with any one of the preceding claims.

8. A double seal in accordance with claim 7,
**characterized in that**
the first seal (47) and the second seal (49) each have a metal body (703) closed in ring shape, with preferably the metal bodies (703) of the two seals (47, 49) being formed in one piece with one another, and preferably separably from one another.

9. A vacuum system (21) comprising at least a first vacuum device, in particular a vacuum pump (23), preferably a turbomolecular pump, and at least a second vacuum device, in particular a recipient (25), wherein an outlet, in particular an outlet flange (43), of the second vacuum device is releasably connected or connectable to an inlet, in particular to an inlet flange (45), of the first vacuum device, with at least one seal (701) in accordance with any one of the claims 1 to 6 or at least one multiple seal or double seal in accordance with claim 7 or claim 8 being arranged between the outlet and the inlet.

10. A vacuum system in accordance with claim 9,
**characterized in that**
at least one cutting edge, which preferably runs around in the peripheral direction of the respective sealing surface, is formed at the outlet and/or at the inlet for cooperation with the seal (701), with the cutting edge having a height of between 0.05 mm and 0.2 mm or between 0.05 mm and 0.5 mm.

11. A vacuum system comprising at least one first vacuum device, in particular a vacuum pump (23), preferably a turbomolecular pump, and at least one second vacuum device, in particular a recipient (25), wherein an outlet, in particular an outlet flange (43), of the second vacuum device is releasably connected or connectable to an inlet, in particular to an inlet flange (45), of the first vacuum device, with a jacket composed of a non-metallic material and running around in the peripheral direction of the inlet or outlet at least being arranged at the surface of the outlet (43) facing the inlet (45) and/or at least being arranged at the surface of the inlet (45) facing the outlet (43), **characterized in that**
at least one of the two surfaces has an elevated portion (715) running around in the peripheral direction and projecting from the surface, with the jacket (705) covering the elevated portion (715).

12. A vacuum pump (23, 111), in particular a turbomolecular pump, comprising an inlet, in particular an inlet flange (45, 113), for connecting an outlet, in particular an outlet flange (43), of a recipient (25),
wherein a jacket composed of a non-metallic material and running around in the peripheral direction of the inlet is at least arranged at the surface of the inlet (45, 113) which faces the outlet (43) when the recipient (25) is connected,
**characterized in that**
the surface has an elevated portion (715) running around in the peripheral direction and projecting from the surface, with the jacket (705) covering the elevated portion (715).

## Revendications

1. Joint d'étanchéité au vide (701) pour étancher une liaison entre deux surfaces d'étanchéité, en particulier des brides (43, 45, 113), en particulier une sortie (43) d'un récipient (25) et une entrée (45, 113) d'une pompe à vide (23, 111), en particulier d'une pompe turbomoléculaire,
dans lequel
le joint d'étanchéité (701) comprend un corps métallique (703) fermé en forme d'anneau,
une enveloppe (705) en matériau non métallique est disposée sur le corps métallique (703),
le corps métallique (703) présente deux côtés de surface (711, 713),
l'un des côtés de surface (711) fait face à une surface d'étanchéité et l'autre des côtés de surface (713) fait face à l'autre surface d'étanchéité lorsque le joint d'étanchéité (701) est disposé correctement entre les deux surfaces d'étanchéité,
**caractérisé en ce que**
l'un au moins des deux côtés de surface (711) présente un bossage (715) qui s'étend en direction périphérique U du joint d'étanchéité (701) et qui fait saillie du côté de surface (711), l'enveloppe (705) recouvrant le bossage (715).

2. Joint d'étanchéité (701) selon la revendication 1,
**caractérisé en ce que**
le corps métallique (703) est réalisé sous la forme d'un élément d'étanchéité présentant l'élasticité d'un ressort ou sous la forme d'un joint d'étanchéité plat, et/ou
le corps métallique (703) comprend ou consiste en aluminium, en un alliage d'aluminium ou en cuivre, en particulier en cuivre recuit.

3. Joint d'étanchéité (701) selon l'une des revendications précédentes, **caractérisé en ce que**
l'enveloppe (705) comprend au moins une couche (707, 709) en matériau non-métallique qui est disposée sur une partie de la surface du corps métallique (703), et/ou
l'enveloppe (705) comprend ou consiste en un élastomère ou en une autre matière plastique non dégageant du gaz ou dégageant seulement peu de gaz.

4. Joint d'étanchéité (701) selon la revendication 3,
**caractérisé en ce que**
l'élastomère est du PTFE ou un matériau à base de PTFE, tel que du PFA, TFM ou FEP, et de préférence l'élastomère présente une matière de charge.

5. Joint d'étanchéité (701) selon l'une des revendications précédentes, **caractérisé en ce que**
l'enveloppe (705) est appliquée sur le corps métallique (703) à la manière d'un revêtement ou est montée sur le corps métallique (703) au moyen d'un procédé d'assemblage en particulier par coopération de matière, par coopération de forme ou au moyen d'un procédé thermique, tel que le laminage ou la rétraction, et/ou
l'enveloppe (705) entoure la surface du corps métallique (703) soit complètement soit seulement en partie.

6. Joint d'étanchéité (701) selon l'une des revendications précédentes, **caractérisé en ce que**
le bossage (715) présente une hauteur de 0,05 mm à 0,2 mm ou de 0,05 mm à 0,5 mm.

7. Joint d'étanchéité multiple ou double pour étancher une liaison entre deux surfaces d'étanchéité, en particulier des brides (43, 45), en particulier entre une sortie (43) d'un récipient (25) et une entrée (45) d'une pompe à vide (23), en particulier d'une pompe turbomoléculaire,
dans lequel
le joint d'étanchéité multiple ou double comprend au moins un premier joint d'étanchéité (47) et un second joint d'étanchéité (49) qui peuvent être disposés entre les surfaces d'étanchéité, en particulier entre les brides (43, 45), de telle sorte que le second joint d'étanchéité (49) entoure le premier joint d'étanchéité (47) à une distance par rapport au premier joint d'étanchéité (47), l'un des deux joints d'étanchéité (47, 49) et de préférence le premier joint d'étanchéité (47) intérieur étant un joint d'étanchéité (701) selon l'une des revendications précédentes.

8. Joint d'étanchéité double selon la revendication 7,
**caractérisé en ce que**
le premier joint d'étanchéité (47) et le second joint d'étanchéité (49) comprennent chacun un corps métallique (703) fermé en forme d'anneau, les corps métalliques (703) des deux joints d'étanchéité (47, 49) étant de préférence réalisés d'un seul tenant et de préférence de manière à pouvoir être séparés l'un de l'autre.

9. Système à vide (21) comprenant au moins un premier dispositif à vide, en particulier une pompe à vide (23), de préférence une pompe turbomoléculaire, et au moins un second dispositif à vide, en particulier un récipient (25),
dans lequel
une sortie, en particulier une bride de sortie (43), du second dispositif à vide est reliée ou susceptible d'être reliée de façon amovible à une entrée, en particulier à une bride d'entrée (45), du premier dispositif à vide, et au moins un joint d'étanchéité (701) selon l'une des revendications 1 à 6 ou au moins un joint d'étanchéité multiple ou double selon la revendication 7 ou 8 est disposé entre la sortie et l'entrée.

10. Système à vide selon la revendication 9,
**caractérisé en ce que**
au moins une arête de coupe destinée à coopérer avec le joint d'étanchéité (701) et s'étendant de préférence en direction périphérique de la surface d'étanchéité respective est réalisée au niveau de la sortie et/ou de l'entrée, l'arête de coupe présentant une hauteur entre 0,05 mm et 0,2 mm ou entre 0,05 mm et 0,5 mm.

11. Système à vide comprenant au moins un premier dispositif à vide, en particulier une pompe à vide (23), de préférence une pompe turbomoléculaire, et au moins un second dispositif à vide, en particulier un récipient (25), dans lequel
une sortie, en particulier une bride de sortie (43), du second dispositif à vide est reliée ou susceptible d'être reliée de façon amovible à une entrée, en particulier à une bride d'entrée (45), du premier dispositif à vide, et une enveloppe en matériau non-métallique s'étendant en direction périphérique de l'entrée ou de la sortie est disposée au moins sur la surface de la sortie (43) qui fait face à l'entrée (45) et/ou au moins sur la surface de l'entrée (45) qui fait face à la sortie (43),
**caractérisé en ce que**
l'une au moins des deux surfaces présente un bossage (715) qui s'étend en direction périphérique et qui fait saillie de la surface, l'enveloppe (705) recouvrant le bossage (715).

12. Pompe à vide (23, 111), en particulier pompe turbomoléculaire, comportant une entrée, en particulier une bride d'entrée (45, 113), pour raccorder une sortie, en particulier une bride de sortie (43), d'un récipient (25),
dans laquelle
une enveloppe en matériau non-métallique s'étendant en direction périphérique de l'entrée est disposée au moins sur la surface de l'entrée (45, 113) qui fait face à la sortie (43) lorsque le récipient (25) est raccordé, **caractérisée en ce que**
la surface présente un bossage (715) qui s'étend en direction périphérique et qui fait saillie de la surface, l'enveloppe (705) recouvrant le bossage (715).
